(19) Europäisches Patentamt / European Patent Office / Office européen des brevets

(11) **EP 4 671 290 A1**

(12) **EUROPEAN PATENT APPLICATION**

(43) Date of publication:
**31.12.2025  Bulletin 2026/01**

(21) Application number: **24184900.9**

(22) Date of filing: **27.06.2024**

(51) International Patent Classification (IPC):
**C08F 210/06** (2006.01)   **C08L 23/10** (2006.01)
**C08L 23/12** (2006.01)

(52) Cooperative Patent Classification (CPC):
(C-Sets available)
**C08F 210/06; C08L 23/10; C08L 23/12;**
C08L 2205/025; C08L 2205/035; C08L 2205/24;
C08L 2207/02; C08L 2207/20; C08L 2308/00;
C08L 2314/02                                    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **WANG, Jingbo**
  **4021 Linz (AT)**

• **FAWAZ, Joel**
  **4021 Linz (AT)**
• **GAHLEITNER, Markus**
  **4021 Linz (AT)**
• **CHENG, Joy Jie**
  **4021 Linz (AT)**
• **KNIESEL, Claudia**
  **4021 Linz (AT)**
• **LUMMERSTORFER, Thomas**
  **4021 Linz (AT)**

(74) Representative: **TBK**
**Bavariaring 4-6**
**80336 München (DE)**

(54) **HETEROPHASIC POLYPROPYLENE AS AN IMPACT MODIFIER FOR RECYCLATES**

(57)    The present invention provides a recyclate-based polymer composition comprising a specific reactor thermoplastic polyolefin (rTPO) acting as an impact modifier for improving the toughness without compromising on the stiffness, as well as a production method for the recyclate-based polymer composition, the use of the recyclate-based polymer composition and a film or article comprising the recyclate-based polymer composition.

EP 4 671 290 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/651;**
**C08F 210/06, C08F 4/6546;**
**C08L 23/10, C08L 23/04, C08L 23/12,**
**C08L 23/142, C08L 23/16;**
**C08L 23/10, C08L 23/04, C08L 23/12,**
**C08L 23/142, C08L 23/16, C08L 23/16;**
**C08L 23/12, C08L 23/142, C08L 23/16;**
**C08L 23/12, C08L 23/142, C08L 23/16,**
**C08L 23/16;**
C08F 110/06, C08F 2500/12;
C08F 210/06, C08F 210/16, C08F 2500/12,
C08F 2500/17, C08F 2500/27, C08F 2500/30,
C08F 2500/31, C08F 2500/32, C08F 2500/33,
C08F 2500/34, C08F 2500/35, C08F 2500/39

## Description

### Field of the invention

The present invention relates to a recyclate-based polymer composition containing a heterophasic reactor thermoplastic polyolefin (rTPO) as an impact modifier for improving the toughness without compromising on the stiffness. The present invention furthermore relates to the use of a heterophasic reactor thermoplastic polyolefin (rTPO) as an impact modifier for improving the impact strength of a polyolefin (PO)-based recyclate (A), a method for manufacturing a recyclate-based polymer composition, the use of the recyclate-based polymer composition for producing a film or a molded article, and a film or article, comprising the recyclate-based polymer composition.

### Technical background

Polyolefins, in particular polyethylene (PE) and polypropylene (PP) are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is a great potential for intelligent reuse of plastic waste streams and for mechanical recycling of plastic wastes.

Generally, recycled materials from post-consumer waste streams are often mixtures of both polypropylene (PP) and polyethylene (PE) and commercial recyclates from post-consumer waste sources are conventionally cross contaminated with non-polyolefin materials, which can limit final applications or recycling streams.

Recycled polyolefin materials normally have properties, which are much worse than those of the virgin materials, unless the amount of recycled polyolefin added to the final compound is low, which can exclude the application of recycled materials for high quality parts and demanding applications,

Post-consumer recyclates (PCR) consist of a heterogeneous mixture of several materials that depend on the original feedstock and sorting mechanism applied. For PO-based PCR, the main contaminant in polypropylene (PP) PCR is identified as polyethylene (PE) (with C2 ranging between 2 wt.-% to 10 wt.-%). This has impact on the compatibility of PP/PE systems as it depends on the nature of PE present; whether it is linear low density polyethylene (LLDPE), low density polyethylene (LDPE) or high density polyethylene (HDPE). Consequently, any compatibility loss would lead to poor mechanical properties of PCR compounds. Therefore, by the means of polymer and compound design, an ethylene-propylene rubber (EPR) system would help in compatibilizing the system and improving the mechanical properties (Gahleitner et al. Intern. Polymer Processing XVII (2002) 4).

While the addition of such compatibilizer would improve the toughness behavior, it comes at the cost of stiffness which can be said to be a trade-off relationship. Therefore, such compounds would tend to be limited to applications in where stiffness is not needed.

EP 2984130 B1 relates to a very generally process for the preparation of a polyolefin mixture comprising the step (a) of mixing together a base polymeric mixture and a polymeric mixture, wherein said polymeric mixture is obtained from the recycling of post-consumer plastic materials. It does however not suggest the use of a heterophasic reactor thermoplastic polyolefin (rTPO) as an impact modifier. EP 3140348 B1 relates to PP-PE blends compatibilized by a heterophasic polyolefin composition in which no selection in terms of ethylene content of the soluble fraction (C2(SF)) is made. EP 3165473 B1 relates to recycled PE/PP compositions with high melt flow rate (MFR) heterophasic PP copolymer (HECO) as compatibilizer. EP 3802689 B1 relates to a polypropylene-based composition comprising post-consumer resin (PCR) comprising a component B which may be heterophasic propylene copolymer having an MI2 ranging from 0.1 to 10.0 g/10 min as determined according to ISO 1133 conditions M, at a temperature of 230°C and under a load of 2.16 kg. WO 2020/070175 A1 and WO 2020/070176 A1 each relate to a polyethylene-polypropylene composition comprising a recycled material and a compatibilizer being a heterophasic random copolymer similar to that of the comparative Example CE2 of the present invention. WO 2020/182435 A1 relates to a polyolefin composition comprising a recycled polyolefin mixture and a modifier/compatibilizer which is a specific copolymer with a high C2 content for adjusting tensile properties. WO 2020/221741 A1 relates to a polymer composition comprising PP PE recycling material modified with a specific C3C6 random copolymer. WO 2023/062058 A1 relates to a polypropylene composition being a mixed-plastics polypropylene blend where a PCR is modified with a high-flow PP homopolymer to achieve high gloss.

Therefore, there is a demand for a proper compatibilizer system to accommodate the different PE contaminants present in PCRs, and to improve mechanical properties, while keeping in mind the Design for Recycling (DfR) regulations.

### Summary of the invention

It is therefore the object of the present invention to provide a recyclate-based polymer composition that is itself recyclable and that shows improved mechanical properties, especially in terms of improved toughness behavior (impact strength) while maintaining the stiffness (flexural modulus), as well as the use of a heterophasic reactor thermoplastic polyolefin (rTPO) as an impact modifier for improving the impact strength of a polyolefin-based recyclate, a method for manufacturing the recyclate-based polymer composition, the use of the recyclate-based polymer composition for producing a film or a molded article, and a film or article, comprising the recyclate-based polymer composition.

The inventors of the present invention surprisingly found that the object can be solved by providing a recyclate-based polymer composition comprising, based on the total weight of the recyclate-based polymer composition, the following components:

(A) 55.0 to 97.0 wt.-%, preferably 78.0 to 97.0 wt.-%, more preferably 79.0 to 95.0 wt.-%, most preferably 80.0 to 90.0 wt.-%, of a polyolefin (PO)-based recyclate, which has:

a melt flow rate $MFR_2$, according to ISO 1133 at 230°C and 2.16 kg load, in the range of 1.0 to 20.0 g/10 min, a soluble fraction (SF) and a crystalline fraction (CF), both determined by CRYSTEX measurement according to the description, wherein the soluble fraction (SF) is present in an amount of 5.0 to 20.0 wt.-%, a total ethylene (C2) content, determined by CRYSTEX measurement calibrated with NMR according to the description, in the range of 15.0 to 60.0 wt.-%,

of which an ethylene content of the soluble fraction ($C2_{SF}$) is in the range of 15.0 to 60.0 wt.-% and wherein an intrinsic viscosity of the soluble fraction ($IV_{SF}$), determined by CRYSTEX measurement according to the example section, is in the range of 0.50 to 2.50 dL/g, and of which an ethylene content of the crystalline fraction ($C2_{CF}$) is in the range of 15.0 to 60.0 wt.-% and wherein an intrinsic viscosity of the crystalline fraction ($IV_{CF}$), determined by CRYSTEX measurement according to the example section, is in the range of 1.00 to 3.00 dL/g, the polyolefin (PO)-based recyclate having melting properties, such that

a first melting temperature $T_{m1}$, according to DSC, is in the range of 150.0 to 170.0°C, $T_{m1}$ reflecting a polypropylene (PP) component, a first melting enthalpy $H_{m1}$, according to DSC, in the range of 20.0 to 80.0 J/g, $H_{m1}$ reflecting a polypropylene (PP) component, a second melting temperature $T_{m2}$, according to DSC, is in the range of 110.0 to 135.0°C, $T_{m2}$ reflecting a polyethylene (PE) component, and a second melting enthalpy $H_{m2}$, according to DSC, in the range of 40.0 to 150.0 J/g, $H_{m2}$ reflecting a polyethylene (PE) component,

(B) 3.0 to 45.0 wt.-%, preferably 3.0 to 22.0 wt.-%, more preferably 5.0 to 20.0 wt.-%, most preferably 10.0 to 18.0 wt.-%, of an impact modifier, which is a heterophasic reactor thermoplastic polyolefin (rTPO) being a reactor blend made in a three-stage or four-stage polymerization process and having the following properties:

a melting temperature $T_m$, according to DSC, in the range of 155.0 to 170.0°C, a soluble fraction (SF) and a crystalline fraction (CF), both determined by CRYSTEX measurement according to the description, wherein the soluble fraction (SF) is present in an amount of 15.0 to 40.0 wt.-%, a total ethylene (C2) content, determined by CRYSTEX measurement calibrated with NMR according to the description, in the range of 9.0 to 17.0 wt.-%,

of which an ethylene content of the soluble fraction ($C2_{SF}$) is in the range of 22.0 to 48.0 wt.-% and wherein an intrinsic viscosity of the soluble fraction ($IV_{SF}$), determined by CRYSTEX measurement according to the example section, is in the range of 1.50 to 4.00 dL/g, and of which an ethylene content of the crystalline fraction ($C2_{CF}$) is in the range of 1.5 to 8.5 wt.-% and wherein an intrinsic viscosity of the crystalline fraction ($IV_{CF}$), determined by CRYSTEX measurement according to the example section, is in the range of 2.00 to 4.50 dL/g, wherein a ratio of the intrinsic viscosity of the soluble fraction ($IV_{SF}$) to the intrinsic viscosity of the crystalline fraction ($IV_{CF}$) ($IV_{SF}/IV_{CF}$) is less than 1.0, and

a melt flow rate $MFR_2$, according to ISO 1133 at 230°C and 2.16 kg load, in the range of 0.5 to 8.0 g/10 min,

wherein the recyclate-based polymer composition has:

a flexural modulus (FM), according to ISO 178, in the range of 600 to 1200 MPa, preferably 800 to 1000 MPa, more preferably 805 to 900 MPa,

an impact strength, Charpy notched ISO 179-1 at 23°C, in the range of 8.0 to 30.0 $kJ/m^2$, preferably 8.0 to 20.0 $kJ/m^2$, more preferably 8.2 to 15.0 $kJ/m^2$, and

a melt flow rate $MFR_2$, according to ISO 1133 at 230°C and 2.16 kg load, in the range of 1.0 to 20.0 g/10 min, preferably 1.5 to 15.0 g/10 min, more preferably 2.5 to 10.0 g/10 min.

By means of the above-identified configuration, in particular the tailored combination of a polyolefin (PO)-based recyclate having specified characteristics with an impact modifier, which is a heterophasic reactor thermoplastic polyolefin (rTPO) having specified characteristics, preferably having a homopolymer (PPH) - random copolymer (rEP) arrangement (which is thought to form a matrix phase / fraction) with a high amount of specific elastomeric first ethylene-enriched ethylene/propylene polymer fraction (EPC) and optionally a second ethylene-enriched ethylene/propylene polymer fraction (EEPC) (which is/are thought to be dispersed in the matrix phase), a recyclate-based polymer composition can be provided that achieves the surprising technical effects of showing improved mechanical properties, especially in terms of improved toughness behavior (impact strength) while maintaining the stiffness (flexural modulus). Thus, with using this tailored impact modifier, the mechanical properties of a polyolefin (PO)-based recyclate can be improved.

The present invention further relates to a method for manufacturing a recyclate-based polymer composition, the use of a heterophasic reactor thermoplastic polyolefin (rTPO) as an impact modifier, the use of the recyclate-based polymer composition for producing a film and a film or article comprising the recyclate-based polymer composition.

Preferred embodiments of the invention are depicted in the dependent claims and a detailed description of the invention is provide in the following description.

**Detailed Description**

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the following amounts are given in % by weight (wt.-%) unless it is stated otherwise.

The term "recycled" is used to indicate a polymer or material recovered from post-consumer waste or post-industrial waste, as opposed to virgin polymer or materials. The term "post-consumer" refers to objects having completed at least a first use cycle (or life cycle), i.e. having already served their first purpose, while "industrial waste" refers to the manufacturing scrap which does normally not reach a consumer. The term "virgin" denotes the newly produced materials and/or objects prior to their first use, which have not already been recycled. The term "recycled material" such as used herein denotes materials reprocessed from "recycled waste". In case that the origin of the polymer is not explicitly mentioned, the polymer is a "virgin" polymer.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

A detailed description of the recyclate-based polymer composition, the polyolefin (PO)-based recyclate, the impact modifier (rTPO), the uses and the method of the present invention will be provided below.

**Recyclate-based polymer composition (RCP)**

The recyclate-based polymer composition (RCP) of the present invention comprises, based on the total weight of the RCP, the following components:

(A) 55.0 to 97.0 wt.-%, preferably 78.0 to 97.0 wt.-%, more preferably 79.0 to 95.0 wt.-%, most preferably 80.0 to 90.0 wt.-%, of a polyolefin (PO)-based recyclate, which has:

a melt flow rate $MFR_2$, according to ISO 1133 at 230°C and 2.16 kg load, in the range of 1.0 to 20.0 g/10 min,

a soluble fraction (SF) and a crystalline fraction (CF), both determined by CRYSTEX measurement according to the description, wherein the soluble fraction (SF) is present in an amount of 5.0 to 20.0 wt.-%,
a total ethylene (C2) content, determined by CRYSTEX measurement calibrated with NMR according to the description, in the range of 15.0 to 60.0 wt.-%,

of which an ethylene content of the soluble fraction ($C2_{SF}$) is in the range of 15.0 to 60.0 wt.-% and wherein an intrinsic viscosity of the soluble fraction ($IV_{SF}$), determined by CRYSTEX measurement according to the example section, is in the range of 0.50 to 2.50 dL/g, and
of which an ethylene content of the crystalline fraction ($C2_{CF}$) is in the range of 15.0 to 60.0 wt.-% and wherein an intrinsic viscosity of the crystalline fraction ($IV_{CF}$), determined by CRYSTEX measurement according to the example section, is in the range of 1.00 to 3.00 dL/g,
the polyolefin (PO)-based recyclate having melting properties, such that

a first melting temperature $T_{m1}$, according to DSC, is in the range of 150.0 to 170.0°C, $T_{m1}$ reflecting a polypropylene (PP) component,
a first melting enthalpy $H_{m1}$, according to DSC, in the range of 20.0 to 80.0 J/g, $H_{m1}$ reflecting a polypropylene (PP) component,
a second melting temperature $T_{m2}$, according to DSC, is in the range of 110.0 to 135.0°C, $T_{m2}$ reflecting a polyethylene (PE) component, and
a second melting enthalpy $H_{m2}$, according to DSC, in the range of 40.0 to 150.0 J/g, $H_{m2}$ reflecting a polyethylene (PE) component,

(B) 3.0 to 45.0 wt.-%, preferably 3.0 to 22.0 wt.-%, more preferably 5.0 to 20.0 wt.-%, most preferably 10.0 to 18.0 wt.-%, of an impact modifier, which is a heterophasic reactor thermoplastic polyolefin (rTPO) being a reactor blend made in a three-stage or four-stage polymerization process and having the following properties:

a melting temperature $T_m$, according to DSC, in the range of 155.0 to 170.0°C,
a soluble fraction (SF) and a crystalline fraction (CF), both determined by CRYSTEX measurement according to the description, wherein the soluble fraction (SF) is present in an amount of 15.0 to 40.0 wt.-%,
a total ethylene (C2) content, determined by CRYSTEX measurement calibrated with NMR according to the description, in the range of 9.0 to 17.0 wt.-%,

of which an ethylene content of the soluble fraction ($C2_{SF}$) is in the range of 22.0 to 48.0 wt.-% and wherein an intrinsic viscosity of the soluble fraction ($IV_{SF}$), determined by CRYSTEX measurement according to the example section, is in the range of 1.50 to 4.00 dL/g, and
of which an ethylene content of the crystalline fraction ($C2_{CF}$) is in the range of 1.5 to 8.5 wt.-% and wherein an intrinsic viscosity of the crystalline fraction ($IV_{CF}$), determined by CRYSTEX measurement according to the example section, is in the range of 2.00 to 4.50 dL/g,
wherein a ratio of the intrinsic viscosity of the soluble fraction ($IV_{SF}$) to the intrinsic viscosity of the crystalline fraction ($IV_{CF}$) ($IV_{SF}/IV_{CF}$) is less than 1.0, and

a melt flow rate $MFR_2$, according to ISO 1133 at 230°C and 2.16 kg load, in the range of 0.5 to 8.0 g/10 min,

wherein the recyclate-based polymer composition has:

a flexural modulus (FM), according to ISO 178, in the range of 600 to 1200 MPa, preferably 800 to 1000 MPa, more preferably 805 to 900 MPa,
an impact strength, Charpy notched ISO 179-1 at 23°C, in the range of 8.0 to 30.0 kJ/m$^2$, preferably 8.0 to 20.0 kJ/m$^2$, more preferably 8.2 to 15.0 kJ/m$^2$, and
a melt flow rate $MFR_2$, according to ISO 1133 at 230°C and 2.16 kg load, in the range of 1.0 to 20.0 g/10 min, preferably 1.5 to 15.0 g/10 min, more preferably 2.5 to 10.0 g/10 min.

That is, the recyclate-based polymer composition (RCP) in accordance with the present invention essentially comprises the polyolefin (PO)-based recyclate and the impact modifier and may further contain other components such as additive(s). The requirement applies that the polyolefin (PO)-based recyclate and the impact modifier and the other components, as far as being present, add up to 100 wt.-%, provided that the summed amount of the polyolefin (PO)-based recyclate and the impact modifier accounts for at least 90.0 wt.-% of the RCP. Preferably, the RCP of the present invention comprises, based on the total weight of the RCP, 90.0 to 99.99 wt.-%, more preferably 92.0 to 99.99 wt.-%, more preferably 95.0 to 99.95 wt.-%, most preferably 97.5 to 99.90 wt.-%, of the summed amount of the polyolefin (PO)-based recyclate and the impact modifier, thereby significantly facilitating the recycling of films or articles formed of the composition. It is to be understood that if various ranges are indicated, the lower and upper limit(s) of the various ranges can be suitable combined to form another range and this general principle applies throughout the entire application. Further, the present invention can attain the envisaged technical effects by combining the polyolefin (PO)-based recyclate and the impact modifier as the only polymer components, so that it is not necessary for the composition to contain polymer components other than the polyolefin (PO)-based recyclate and the impact modifier. However, provided that the essential characteristics of the present invention are not impaired, other polymers may be present for attaining certain properties. In a preferred embodiment, the recyclate-based polymer composition contains no other polymer components than polyolefin (PO)-based recyclate and the impact modifier, except for optional polymeric nucleating agent(s) and/or carrier polymers of a masterbatch for adding other component(s) such as additive(s). The RCP preferably comprises other component(s) such as additives, optionally provided as masterbatch. That is, a skilled person appreciates that other component(s) such as additives can be added to the RCP in a polymer component in the form of a masterbatch (also referred to as carrier polymer of the masterbatch), while the carrier polymer of a masterbatch is preferably a polypropylene homopolymer. The amount of such masterbatch carrier polymer, if used, usually does not exceed 4.00 wt.-%, preferably is used in an amount of 3.00 wt.-% or less or 2.50 wt.-% or less, based on the total weight of the RCP.

That is, the recyclate-based polymer composition preferably comprises, based on the total weight of the recyclate-based polymer composition, up to 5.000 wt.-%, preferably 0.010 to 3.500 wt.-%, more preferably 0.025 to 2.500 wt.-%, more preferably 0.050 to 1.500 wt.-%, most preferably 0.075 to 0.750 wt.-%, additive(s), said additive(s) being preferably selected from the group consisting of antioxidants, acid scavenges, UV-stabilizers, antistatic agents, and slip agents and mixtures thereof. Notably, it is possible that two or more functions can be combined in the same molecule and such a constitution may be preferred to reduce the overall amount of additives. The additive(s) may be added to the composition in pure form or in the form of a masterbatch in a carrier resin. Preferably, at least antioxidant(s), more preferably at least antioxidant(s) and acid scavenger(s), are present as additive(s). Such additives are well known in the art and ensure favorable stability and/or performance of the composition in its designated application.

Further, a skilled person and the present invention appreciates modifications e.g. in that the recyclate-based polymer composition comprises optional component(s) other than the above additive(s), such as nucleating agents, utilization agents, polymer additives, fillers, coloring agents, anti-block agents, processing aids, and modifiers commonly known in the art in an amount up to 5.000 wt.-% or up to 2.500 wt.-%, as long as the claimed requirements of the recyclate-based polymer composition are satisfied. Thus, care must be taken not to add any optional component(s), which interfere with attaining the claimed properties of the recyclate-based polymer composition. In a preferred embodiment, the recyclate-based polymer composition comprises no optional component(s) other than the above additive(s).

The recyclate-based polymer composition of the present invention is thus characterized by essentially comprising (A) a specified amount of polyolefin (PO)-based recyclate, which has predetermined characteristics in terms of melt flow rate $MFR_2$, soluble fraction (SF) content, a total ethylene (C2) content, an ethylene content of the soluble fraction ($C2_{SF}$), an intrinsic viscosity of the soluble fraction ($IV_{SF}$), an ethylene content of the crystalline fraction ($C2_{CF}$), an intrinsic viscosity of the crystalline fraction ($IV_{CF}$), a first melting temperature $T_{m1}$ and a first melting enthalpy $H_{m1}$ each reflecting a polypropylene (PP) component, and a second melting temperature $T_{m2}$ and second melting enthalpy $H_{m2}$ each reflecting a polyethylene (PE) component. A detailed description of the polyolefin (PO)-based recyclate contained in the recyclate-based polymer composition of the present invention will be given later.

The recyclate-based polymer composition of the present invention is thus further characterized by essentially comprising (B) a specified amount of an impact modifier, which is a heterophasic reactor thermoplastic polyolefin (rTPO) which has predetermined characteristics in terms of melting temperature $T_m$, a soluble fraction (SF) content, a total ethylene (C2) content, an ethylene content of the soluble fraction ($C2_{SF}$), an intrinsic viscosity of the soluble fraction ($IV_{SF}$), an ethylene content of the crystalline fraction ($C2_{CF}$), an intrinsic viscosity of the crystalline fraction ($IV_{CF}$), a ratio ($IV_{SF}/IV_{CF}$), and a melt flow rate $MFR_2$. A detailed description of the impact modifier contained in the recyclate-based polymer composition of the present invention will be given later.

By means of the suitably adjusted properties of the polyolefin (PO)-based recyclate and of the impact modifier, the present invention is unexpectedly able to provide a recyclate-based polymer composition that achieves the surprising technical effects of showing improved mechanical properties, especially in terms of improved toughness behavior (impact strength) while maintaining the stiffness (flexural modulus).

Thus, the polyolefin (PO)-based recyclate and the impact modifier are combined to result in a recyclate-based polymer composition of the present invention being characterized by:

a flexural modulus (FM), according to ISO 178, in the range of 600 to 1200 MPa,
an impact strength, Charpy notched ISO 179-1 at 23°C, in the range of 8.0 to 30.0 $kJ/m^2$, and
a melt flow rate $MFR_2$, according to ISO 1133 at 230°C and 2.16 kg load, in the range of 1.0 to 20.0 g/10 min.

Preferably, the recyclate-based polymer composition of the present invention has a flexural modulus (FM), according to ISO 178, in the range of 800 to 1000 MPa, more preferably 805 to 900 MPa. In this case, the present invention is achieve favorable stiffness/bending properties and can thus be used in applications requiring a certain stiffness behavior.

Preferably, the recyclate-based polymer composition of the present invention has an impact strength, Charpy notched ISO 179-1 at 23°C, in the range of 8.0 to 20.0 kJ/m$^2$, more preferably 8.2 to 15.0 kJ/m$^2$. In this case, the present invention is achieving favorable impact properties and can thus be used in applications requiring very good impact properties also at moderate (ambient) temperatures.

Due to the use of the specific impact modifier (rTPO) of the present invention in combination with the polyolefin (PO)-based recyclate, the present invention is able to provide a recyclate-based polymer composition showing an increase in impact strength, Charpy notched ISO 179-1 at 23°C, as compared to an identical recyclate-based polymer composition except for not containing the impact modifier (B), in the range of 28.0 to 55.0%, preferably 29.0 to 50.0%. That is, the use of the specific impact modifier results in a significant improvement of the impact strength at ambient temperature.

Preferably, the recyclate-based polymer composition of the present invention has an impact strength, Charpy notched ISO 179-1 at -20°C, in the range of 1.5 to 5.5 kJ/m$^2$, preferably in the range of 2.0 to 4.5 kJ/m$^2$, more preferably in the range of 2.2 to 4.0 kJ/m$^2$. In this case, the present invention is achieving favorable impact properties and can thus be used in applications requiring good impact properties already at very low temperatures.

Preferably, the recyclate-based polymer composition of the present invention has a MFR$_2$, according to ISO 1133 at 230°C and 2.16 kg load, in the range of 1.5 to 15.0 g/10 min, more preferably 2.5 to 10.0 g/10 min. In this case, due to suitably and favorably adjusting the melt behavior, the effects of the present invention are more pronounced and/or their achievement is facilitated, and the composition can be used in applications requiring moderate melt flow properties.

Preferably, the recyclate-based polymer composition of the present invention further has a storage modulus G', as determined by dynamic mechanical analysis according to ISO 6721-7 at 23°C, in the range of 300 to 700 MPa, preferably 350 to 650 MPa, more preferably 400 to 600 MPa. In this case, the present invention is achieve favorable mechanical properties and can thus be used in applications requiring a certain stiffness behavior.

It is to be noted that each of the above described properties of the recyclate-based polymer composition (e.g. FM, Charpy at -20°C and 23°C, Charpy increase, MFR$_2$, G') as described herein may preferably be individually adjusted into a preferred or more preferred range, while it is even more preferred that two or more, preferably all, of the above properties are adjusted into preferred and/or even more preferred ranges in combination. This principle generally applies throughout the entire application to other mentioned properties in connection with (preferred) quantifications.

Applying this general principle, the recyclate-based polymer composition may for instance preferably have:

a flexural modulus (FM), according to ISO 178, in the range of 600 to 1200 MPa, preferably 800 to 1000 MPa, more preferably 805 to 900 MPa,

an impact strength, Charpy notched ISO 179-1 at 23°C, in the range of 8.0 to 30.0 kJ/m$^2$, preferably 8.0 to 20.0 kJ/m$^2$, more preferably 8.2 to 15.0 kJ/m$^2$,

a melt flow rate MFR$_2$, according to ISO 1133 at 230°C and 2.16 kg load, in the range of 1.0 to 20.0 g/10 min, preferably 1.5 to 15.0 g/10 min, more preferably 2.5 to 10.0 g/10 min,

a storage modulus, as determined by dynamic mechanical analysis according to ISO 6721-7 at 23°C, in the range of 300 to 700 MPa, preferably 350 to 650 MPa, more preferably 400 to 600 MPa,

an impact strength, Charpy notched ISO 179-1 at -20°C, in the range of 1.5 to 5.5 kJ/m$^2$, preferably in the range of 2.0 to 4.5 kJ/m$^2$, more preferably in the range of 2.2 to 4.0 kJ/m$^2$, and

an increase in impact strength, Charpy notched ISO 179-1 at 23°C, as compared to an identical recyclate-based polymer composition except for not containing the impact modifier (B), in the range of 28.0 to 55.0%, preferably 29.0 to 50.0%,

or have:

a flexural modulus (FM), according to ISO 178, in the range of 800 to 1000 MPa, more preferably 805 to 900 MPa,

an impact strength, Charpy notched ISO 179-1 at 23°C, in the range of 8.0 to 20.0 kJ/m$^2$, more preferably 8.2 to 15.0 kJ/m$^2$,

a melt flow rate MFR$_2$, according to ISO 1133 at 230°C and 2.16 kg load, in the range of 1.0 to 20.0 g/10 min, preferably 1.5 to 15.0 g/10 min, more preferably 2.5 to 10.0 g/10 min,

a storage modulus, as determined by dynamic mechanical analysis according to ISO 6721-7 at 23°C, in the range of preferably 350 to 650 MPa, more preferably 400 to 600 MPa,

an impact strength, Charpy notched ISO 179-1 at -20°C, in the range of 2.0 to 4.5 kJ/m$^2$, more preferably in the range of 2.2 to 4.0 kJ/m$^2$, and

an increase in impact strength, Charpy notched ISO 179-1 at 23°C, as compared to an identical recyclate-based polymer composition except for not containing the impact modifier (B), in the range of 29.0 to 50.0%.

The method for manufacturing the recyclate-based polymer composition of the present invention is not specifically limited. Preferably, the method for manufacturing the recyclate-based polymer composition of the present invention comprises the steps of:

a) providing the polyolefin (PO)-based recyclate (A) as defined herein;
b) providing the heterophasic reactor thermoplastic polyolefin (rTPO) as it is defined herein;
c) melting and mixing the polyolefin (PO)-based recyclate (A) and the heterophasic reactor thermoplastic polyolefin (rTPO) together, to obtain the recyclate-based polymer composition,
d) optionally cooling the recyclate-based polymer composition and pelletizing it.

Further, the process of compounding (melting and mixing) the impact modifier (rTPO) with the polyolefin (PO)-based recyclate and optional other component(s) such as additive(s) to obtain the recyclate-based polymer composition is in the skilled knowledge and the recyclate-based polymer composition can for instance be obtained by mixing the impact modifier (rTPO) with the polyolefin (PO)-based recyclate and optional other component(s) such as the additive(s) before, during or after melting the components. For mixing, a conventional compounding or blending apparatus, such as e.g. a Banbury® mixer, a 2-roll rubber mill, Buss-co-kneader, a single screw extruder e.g. with special mixing segments or a twin screw extruder may be used. The recyclate-based polymer composition recovered from a compounding or blending apparatus (e.g. the extruder) can be in the form of pellets or powder, and is preferably in the form of pellets including additives.

**Polyolefin (PO)-based recyclate**

The recyclate-based polymer composition of the present invention is characterized by comprising, based on the total weight of the recyclate-based polymer composition, 55.0 to 97.0 wt.-%, preferably 78.0 to 97.0 wt.-%, more preferably 79.0 to 95.0 wt.-%, most preferably 80.0 to 90.0 wt.-%, of a polyolefin (PO)-based recyclate (A), which has:

a melt flow rate $MFR_2$, according to ISO 1133 at 230°C and 2.16 kg load, in the range of 1.0 to 20.0 g/10 min,
a soluble fraction (SF) and a crystalline fraction (CF), both determined by CRYSTEX measurement according to the description, wherein the soluble fraction (SF) is present in an amount of 5.0 to 20.0 wt.-%,
a total ethylene (C2) content, determined by CRYSTEX measurement calibrated with NMR according to the description, in the range of 15.0 to 60.0 wt.-%,

of which an ethylene content of the soluble fraction ($C2_{SF}$) is in the range of 15.0 to 60.0 wt.-% and wherein an intrinsic viscosity of the soluble fraction ($IV_{SF}$), determined by CRYSTEX measurement according to the example section, is in the range of 0.50 to 2.50 dL/g, and
of which an ethylene content of the crystalline fraction ($C2_{CF}$) is in the range of 15.0 to 60.0 wt.-% and wherein an intrinsic viscosity of the crystalline fraction ($IV_{CF}$), determined by CRYSTEX measurement according to the example section, is in the range of 1.00 to 3.00 dL/g,

the polyolefin (PO)-based recyclate having melting properties, such that
a first melting temperature $T_{m1}$, according to DSC, is in the range of 150.0 to 170.0°C, $T_{m1}$ reflecting a polypropylene (PP) component,
a first melting enthalpy $H_{m1}$, according to DSC, in the range of 20.0 to 80.0 J/g, $H_{m1}$ reflecting a polypropylene (PP) component,
a second melting temperature $T_{m2}$, according to DSC, is in the range of 110.0 to 135.0°C, $T_{m2}$ reflecting a polyethylene (PE) component, and
a second melting enthalpy $H_{m2}$, according to DSC, in the range of 40.0 to 150.0 J/g, $H_{m2}$ reflecting a polyethylene (PE) component.

According to the present invention, the term "polyolefin (PO)-based recyclate" indicates a polymer blend that originates from recycled waste. The polymer blend is a recycled material being recovered from waste plastic material derived from post-consumer and/or post-industrial waste. In a specific and preferred embodiment the waste is a consumer waste (i.e. the polyolefin (PO)-based recyclate is a post-consumer recyclate), such waste may originate from conventional collecting systems such as those implemented in the European Union. Post-consumer waste material is usually characterized by a limonene content of from 0.1 to 500 mg/kg (as determined using solid phase microextraction (HS-SPME-GC-MS) by standard addition).

The polyolefin (PO)-based recyclate is a polymer blend is characterized by exhibiting a first melting temperature $T_{m1}$ and a first melting enthalpy $H_{m1}$ each reflecting a polypropylene (PP) component as well as a second melting temperature $T_{m2}$ and a second melting enthalpy $H_{m2}$ each reflecting a polyethylene (PE) component.

As such, the polyolefin (PO)-based recyclate is preferably a polymer blend comprising essentially polypropylene and polyethylene, recovered from waste plastic material derived from post-consumer waste. The total amount of polypropylene and polyethylene usually accounts to at least 80.0 wt.-%, at least 90.0 wt.-% or even at least 95.0 wt.-% of the polyolefin (PO)-based recyclate. The polymer blend thus generally includes predominantly units derived from propylene and ethylene apart from other polymeric ingredients of arbitrary nature. Such polymeric ingredients may for example originate from monomer units derived from alpha olefins such as propylene, 1-butene, 1-hexene, 1-octene, and the like, styrene derivatives such as vinylstyrene, substituted and unsubstituted acrylates, substituted and unsubstituted methacrylates. The polyethylene fraction of the polyolefin (PO)-based recyclate can comprise recycled high-density polyethylene (rHDPE), recycled medium-density polyethylene (rMDPE), recycled low-density polyethylene (rLDPE) and mixtures thereof.

The recyclate-based polymer composition can be a polymer blend comprising, based on the total weight of the polyolefin (PO)-based recyclate:

> 0 to less than 5 wt.-% of polystyrene, and/or,
> 0 to 3 wt.-% talc, and/or,
> 0 to 5.0 wt.-% polyamide, and/or
> 0 to 3 wt.-% chalk, wherein the content of such constituents is preferably as low as possible. Further, it should be noted that the properties of a post-consumer recyclate blend are subject to a certain degree of variation for technical reasons, so that the specific properties can vary to a certain extent from batch to batch.

However, it is essential that the polyolefin (PO)-based recyclate has a total ethylene (C2) content, determined by CRYSTEX measurement calibrated with NMR according to the description herein, in the range 15.0 to 60.0 wt.-%. Preferably, the total ethylene (C2) content is in the range 25.0 to 55.0 wt.-%, more preferably 30.0 to 52.0 wt.-%. In this case, due to suitably and favorably adjusting the amount of the total ethylene (C2) content, the compatibility with the impact modifier is good and the effects of the present invention are more pronounced and/or their achievement is facilitated.

Preferably, the polyolefin (PO)-based recyclate has an ethylene content of the soluble fraction ($C2_{SF}$) in the range of 25.0 to 55.0 wt.-%, more preferably 30.0 to 52.0 wt.-%, and an intrinsic viscosity of the soluble fraction ($IV_{SF}$), determined by CRYSTEX measurement according to the example section, in the range of 0.70 to 2.20 dL/g, more preferably 0.90 to 2.00 dL/g. In this case, due to suitably and favorably adjusting the amount of the $C2_{SF}$ and the $IV_{SF}$, the compatibility with the impact modifier is good and the effects of the present invention are more pronounced and/or their achievement is facilitated.

Preferably, the polyolefin (PO)-based recyclate has an ethylene content of the crystalline fraction ($C2_{CF}$) in the range of 25.0 to 55.0 wt.-%, more preferably 30.0 to 52.0 wt.-%, and an intrinsic viscosity of the crystalline fraction ($IV_{CF}$), determined by CRYSTEX measurement according to the example section, in the range of 1.20 to 2.80 dL/g, more preferably 1.40 to 2.50 dL/g. In this case, due to suitably and favorably adjusting the amount of the $C2_{CF}$ and the $IV_{CF}$, the compatibility with the impact modifier is good and the effects of the present invention are more pronounced and/or their achievement is facilitated.

Preferably, the polyolefin (PO)-based recyclate has a melt flow rate $MFR_2$, according to ISO 1133 at 230°C and 2.16 kg load, in the range of 2.5 to 15.0 g/10 min, more preferably 3.0 to 10.0 g/10 min. In this case, due to suitably and favorably adjusting the $MFR_2$, the effects of the present invention are more pronounced and/or their achievement is facilitated.

Preferably, the polyolefin (PO)-based recyclate has a soluble fraction (SF) in an amount of 6.0 to 18.0 wt.-%, more preferably 6.5 to 15.0 wt.-%. In this case, due to suitably and favorably adjusting the amount of the soluble fraction, the compatibility with the impact modifier is good and the effects of the present invention are more pronounced and/or their achievement is facilitated.

Preferably, the polyolefin (PO)-based recyclate has a first melting temperature $T_{m1}$, according to DSC, is in the range of 152.0 to 168.0°C, more preferably 155.0 to 165.0°C, $T_{m1}$ reflecting a polypropylene (PP) component. In addition, the polyolefin (PO)-based recyclate preferably has a first melting enthalpy $H_{m1}$, according to DSC, in the range of 30.0 to 70.0 J/g, more preferably 35.0 to 60.0 J/g, $H_{m1}$ reflecting a polypropylene (PP) component. Preferably, the polyolefin (PO)-based recyclate has a second melting temperature $T_{m2}$, according to DSC, is in the range of 112.0 to 132.0°C, preferably 113.0 to 130.0°C, $T_{m2}$ reflecting a polyethylene (PE) component. In addition, the polyolefin (PO)-based recyclate preferably has a second melting enthalpy $H_{m2}$, according to DSC, in the range of 50.0 to 125.0 J/g, more preferably 55.0 to 110.0 J/g, $H_{m2}$ reflecting a polyethylene (PE) component. In this case, due to suitably and favorably adjusting the melting temperatures and the melting enthalpy of the polypropylene (PP) component and the polyethylene (PE) component, the compatibility with the impact modifier is good and the effects of the present invention are more pronounced and/or their achievement is facilitated.

It is to be noted that each of the above described properties of the polyolefin (PO)-based recyclate (e.g. $T_m$, $H_m$, SF, total ethylene (C2) content, $C2_{SF}$, $IV_{SF}$, $C2_{CF}$, $IV_{CF}$, $MFR_2$) as described herein may preferably be individually adjusted into a preferred or more preferred range, while it is even more preferred that two or more, preferably all, of the above properties are adjusted into preferred and/or even more preferred ranges in combination. To recall, this principle generally applies throughout the entire application to other mentioned properties in connection with (preferred) quantifications.

As such, the polyolefin (PO)-based recyclate can be obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), MTM Plastics GmbH (DE) etc. It is considered that the present invention is applicable to a broad range of recycled polymer blends comprising essentially polypropylene and polyethylene having the required content of ethylene (C2). The polyolefin (PO)-based recyclate may be in the form of granules. In a certain preferred embodiment, the polyolefin (PO)-based recyclate materials is Dipolen (Mtm Plastics GmbH), such as Dipolen S-74 produced by MTM plastics GmbH, which is obtained from domestic waste streams (i.e. it is a product of domestic recycling) for example the "yellow bag" recycling system, which operates in some parts of Germany.

**Impact modifier (rTPO)**

The recyclate-based polymer composition (RCP) of the present invention is characterized by comprising, based on the total weight of the RCP, 3.0 to 45.0 wt.-%, preferably 3.0 to 22.0 wt.-%, more preferably 5.0 to 20.0 wt.-%, most preferably 10.0 to 18.0 wt.-%, of an impact modifier (B), which is a heterophasic reactor thermoplastic polyolefin (rTPO) being a reactor blend made in a three-stage or four-stage polymerization process and having the following properties:

a melting temperature $T_m$, according to DSC, in the range of 155.0 to 170.0°C,
a soluble fraction (SF) and a crystalline fraction (CF), both determined by CRYSTEX measurement according to the description, wherein the soluble fraction (SF) is present in an amount of 15.0 to 40.0 wt.-%,
a total ethylene (C2) content, determined by CRYSTEX measurement calibrated with NMR according to the description, in the range of 9.0 to 17.0 wt.-%,

of which an ethylene content of the soluble fraction ($C2_{SF}$) is in the range of 22.0 to 48.0 wt.-% and wherein an intrinsic viscosity of the soluble fraction ($IV_{SF}$), determined by CRYSTEX measurement according to the example section, is in the range of 1.50 to 4.00 dL/g, and
of which an ethylene content of the crystalline fraction ($C2_{CF}$) is in the range of 1.5 to 8.5 wt.-% and wherein an intrinsic viscosity of the crystalline fraction ($IV_{CF}$), determined by CRYSTEX measurement according to the example section, is in the range of 2.00 to 4.50 dL/g,
wherein a ratio of the intrinsic viscosity of the soluble fraction ($IV_{SF}$) to the intrinsic viscosity of the crystalline fraction ($IV_{CF}$) ($IV_{SF}/IV_{CF}$) is less than 1.0, and

a melt flow rate $MFR_2$, according to ISO 1133 at 230°C and 2.16 kg load, in the range of 0.5 to 8.0 g/10 min.

By using such a specific impact modifier, the present invention is unexpectedly able to provide a recyclate-based polymer composition that shows improved mechanical properties, especially in terms of improved toughness behavior (impact strength) while maintaining the stiffness (flexural modulus).

It is to be noted that the term 'impact modifier, which is a heterophasic reactor thermoplastic polyolefin (rTPO)' in accordance with the present invention refers to an impact modifier that essentially consists of the heterophasic reactor thermoplastic polyolefin (rTPO) and may contain other component(s) such as nucleating agent(s) and/or especially additive(s). The requirement applies that the rTPO and the other component(s), as far as being present, add up to 100 wt.-%, provided that the amount of the rTPO accounts for at least 94.000 wt.-%, such as 94.000 to 100 wt.-% or 99.000 to 100 wt.-%, or even 100 wt.-% of the impact modifier. Further, as apparent from the wording 'impact modifier, which is a heterophasic reactor thermoplastic polyolefin (rTPO)', the present invention does not aim at a composition of different polymers. Accordingly, the impact modifier comprises other components such as nucleating agent(s) and/or additives, but preferably no other polymer components than the rTPO, except for optional polymeric nucleating agent(s) and/or matrix polymers of a masterbatch for adding additive(s) and/or nucleating agent(s).

Preferably, the rTPO has a melting temperature $T_m$, according to DSC, in the range of 158.0 to 169.0°C. In this case, due to suitably and favorably adjusting the melting temperature, the effects of the present invention are more pronounced and/or their achievement is facilitated.

Preferably, the rTPO has a soluble fraction (SF) in an amount of 20.5 to 35.0 wt.-%, more preferably 21.0 to 30.0 wt.-%. In this case, due to suitably and favorably adjusting the amount of the soluble fraction, the effects of the present invention are more pronounced and/or their achievement is facilitated.

Preferably, the rTPO has a total ethylene (C2) content, determined by CRYSTEX measurement calibrated with NMR according to the description herein, in the range of 9.5 to 16.0 wt.-%, more preferably 9.5 to 15.0 wt.-%. In this case, due to suitably and favorably adjusting the amount of the total ethylene (C2) content, the effects of the present invention are more pronounced and/or their achievement is facilitated.

Preferably, the rTPO has an ethylene content of the soluble fraction ($C2_{SF}$) in the range of 24.0 to 42.0 wt.-%, more preferably 25.0 to 40.0 wt.-%, and an intrinsic viscosity of the soluble fraction ($IV_{SF}$), determined by CRYSTEX measurement according to the example section, in the range of 1.60 to 3.00 dL/g, more preferably 1.70 to 2.50 dL/g. In this case, due to suitably and favorably adjusting the amount of the $C2_{SF}$ and the $IV_{SF}$, the effects of the present invention are more pronounced and/or their achievement is facilitated.

Preferably, the rTPO has an ethylene content of the crystalline fraction ($C2_{CF}$) in the range of 2.5 to 7.0 wt.-%, more preferably 3.5 to 6.5 wt.-%, and an intrinsic viscosity of the crystalline fraction ($IV_{CF}$), determined by CRYSTEX measurement according to the example section, in the range of 2.10 to 4.00 dL/g, more preferably 2.20 to 3.50 dL/g. In this case, due to suitably and favorably adjusting the amount of the $C2_{CF}$ and the $IV_{CF}$, the effects of the present invention are more pronounced and/or their achievement is facilitated.

Preferably, the rTPO has a ratio of the intrinsic viscosity of the soluble fraction ($IV_{SF}$) to the intrinsic viscosity of the crystalline fraction ($IV_{CF}$) ($IV_{SF}/IV_{CF}$) in the range of 0.3 to less than 1.0, preferably 0.4 to 0.9. In this case, due to suitably and favorably adjusting the amount of the ratio $IV_{SF}/IV_{CF}$, the effects of the present invention are more pronounced and/or their achievement is facilitated.

Preferably, the rTPO has a melt flow rate $MFR_2$, according to ISO 1133 at 230°C and 2.16 kg load, in the range of 1.0 to 8.0 g/10 min, more preferably 1.3 to 5.0 g/10 min. In this case, due to suitably and favorably adjusting the $MFR_2$, the effects of the present invention are more pronounced and/or their achievement is facilitated.

Preferably, the rTPO has an intrinsic viscosity IV, determined by CRYSTEX measurement according to the example section, in the range of 1.70 to 4.50 dL/g, more preferably 1.90 to 3.50 dL/g, most preferably 2.00 to 3.30 dL/g. In this case, due to suitably and favorably adjusting the IV, the effects of the present invention are more pronounced and/or their achievement is facilitated.

Preferably, the rTPO has an impact strength, Charpy notched ISO 179-2 at -10°C, in the range of 15.0 to 120.0 $kJ/m^2$, more preferably 20.0 to 115.0 $kJ/m^2$, most preferably 30.0 to 110.0 $kJ/m^2$. In this case, the present invention can favorably improve the impact properties of the recyclate-based polymer composition so that it can be used in applications requiring very good impact properties also at low temperatures.

Preferably, the rTPO has an impact strength, Charpy notched ISO 179-2 at 20°C, in the range of 30.0 to 250.0 $kJ/m^2$, more preferably 40.0 to 220.0 $kJ/m^2$, most preferably 55.0 to 200.0 $kJ/m^2$. In this case, the present invention can favorably improve the impact properties of the recyclate-based polymer composition so that it can be used in applications requiring very good impact properties also at moderate (ambient) temperatures.

Preferably, the rTPO has a flexural modulus (FM), according to ISO 178, in the range of 600 to 1000 MPa, preferably 610 to 850 MPa. In this case, the rTPO can impart favorable stiffness/bending properties and the recyclate-based polymer composition can be used in applications requiring a certain stiffness behavior.

Preferably, the rTPO has a storage modulus G', as determined by dynamic mechanical analysis according to ISO 6721-7 at 23°C, in the range of 250 to 650 MPa, more preferably 350 to 550 MPa . In this case, the rTPO can impart favorable mechanical properties and the recyclate-based polymer composition can be used in applications requiring a certain stiffness behavior. Equally preferably, the rTPO has two glass transition temperatures $T_g(d)$ relating to the disperse phase (EPC) and $T_g(m)$ relating to the matrix phase, as determined by dynamic mechanical analysis according to ISO 6721-7. The respective Tg-values are peak values of the tangent of the loss angle, $\tan(\delta)$, as recorded in the same measurement as detailed below. $T_g(d)$ preferably ranges from -70.0 to -35.0°C, more preferably -65.0 to -40.0°C, most preferred -60.0 to -45.0°C, and $T_g(m)$ preferably ranges from -10 to 10°C, more preferably -5 to 5°C, most preferred -2.0 to 2.0°C.

It is to be noted that that each of the above described properties of the rTPO (e.g. $T_m$, SF, total ethylene (C2) content, $C2_{SF}$, $IV_{SF}$, $C2_{CF}$, $IV_{CF}$, $IV_{SF}/IV_{CF}$, $MFR_2$, IV, Charpy at -10°C and 20°C, FM, G', $T_g$) as described herein may preferably be individually adjusted into a preferred or more preferred range, while it is even more preferred that two or more, preferably all, of the above properties are adjusted into preferred and/or even more preferred ranges in combination. To recall, this principle generally applies throughout the entire application to other mentioned properties in connection with (preferred) quantifications.

Put in other words, applying the general principle, the heterophasic reactor thermoplastic polyolefin (rTPO) can preferably have:

a melting temperature $T_m$, according to DSC, in the range of 158.0 to 169.0°C,
a soluble fraction (SF) in an amount of 20.5 to 35.0 wt.-%, preferably 21.0 to 30.0 wt.-%,

a total ethylene (C2) content, determined by CRYSTEX measurement calibrated with NMR according to the description, in the range of 9.5 to 16.0 wt.-%, preferably 9.5 to 15.0 wt.-%,

of which an ethylene content of the soluble fraction ($C2_{SF}$) is in the range of 24.0 to 42.0 wt.-%, preferably 25.0 to 40.0 wt.-%, and wherein an intrinsic viscosity of the soluble fraction ($IV_{SF}$), determined by CRYSTEX measurement according to the example section, is in the range of 1.60 to 3.00 dL/g, preferably 1.70 to 2.50 dL/g,

of which an ethylene content of the crystalline fraction ($C2_{CF}$) is in the range of 2.5 to 7.0 wt.-%, preferably 3.5 to 6.5 wt.-%, and wherein an intrinsic viscosity of the crystalline fraction ($IV_{CF}$), determined by CRYSTEX measurement according to the example section, is in the range of 2.10 to 4.00 dL/g, preferably 2.20 to 3.50 dL/g,

wherein a ratio of the intrinsic viscosity of the soluble fraction ($IV_{SF}$) to the intrinsic viscosity of the crystalline fraction ($IV_{CF}$) ($IV_{SF}/IV_{CF}$) is in the range of 0.3 to less than 1.0, preferably 0.4 to 0.9,

a melt flow rate $MFR_2$, according to ISO 1133 at 230°C and 2.16 kg load, in the range of 1.0 to 8.0 g/10 min, preferably 1.3 to 5.0 g/10 min,

an intrinsic viscosity IV, determined by CRYSTEX measurement according to the example section, in the range of 1.70 to 4.50 dL/g, preferably 1.90 to 3.50 dL/g, more preferably 2.00 to 3.30 dL/g,

an impact strength, Charpy notched ISO 179-2 at -10°C, in the range of 15.0 to 120.0 $kJ/m^2$, preferably 20.0 to 115.0 $kJ/m^2$, more preferably 30.0 to 110.0 $kJ/m^2$,

an impact strength, Charpy notched ISO 179-2 at 20°C, in the range of 30.0 to 250.0 $kJ/m^2$, preferably 40.0 to 220.0 $kJ/m^2$, more preferably 55.0 to 200.0 $kJ/m^2$,

a flexural modulus (FM), according to ISO 178, in the range of 600 to 1000 MPa, preferably 610 to 850 MPa,

a storage modulus G', as determined by dynamic mechanical analysis according to ISO 6721-7 at 23°C, in the range of 250 to 650 MPa, more preferably 350 to 550 MPa,

a $T_g(d)$ in the range of -70.0 to -35.0°C, preferably -65.0 to -40.0°C, more preferred -60.0 to -45.0°C, and a $T_g(m)$ in the range of -10 to 10°C, preferably -5 to 5°C, more preferably -2.0 to 2.0°C.

The reactor thermoplastic polyolefin (rTPO) according to a first embodiment is a reactor blend made in a three-stage polymerization process. The reactor thermoplastic polyolefin (rTPO) of the first embodiment preferably comprises, based on the total weight of the rTPO, the following fractions:

(B1) 40.0 to 60.0 wt.-% of a polypropylene homopolymer fraction (PPH),
(B2) 30.0 to 45.0 wt.-% of a random ethylene/propylene (C2/C3) polymer fraction (rEP), and
(B3) 10.0 to 25.0 wt.-% of a C2C3 elastomeric propylene copolymer fraction (EPC).

Preferably, the rTPO of the first embodiment essentially consists of the PPH, the rEP, and the EPC (essentially consists meaning that the summed content thereof is 95.0 wt.-% or more based on the total weight of the rTPO). The summed content of PPH, rEP, and EPC in the rTPO is preferably 96.0 wt.-% or more, 97.0 wt.-% or more, 98.0 wt.-% or more, or 99.0 wt.-% or more, and may be even 100 wt.-%. For example, the summed content of PPH, rEP, and EPC in the rTPO may be in the range of from 95.0 wt.-% to 100 wt.-%, preferably 100 wt.-%. By applying the above-mentioned configuration of the rTPO of the first embodiment, it is easier to accomplish the favorable balance between stiffness and impact strength and this balance is more pronounced.

The rTPO of the first embodiment comprises, based on the total weight of the rTPO, 40.0 to 60.0 wt.-%, preferably 42.0 to 58.0 wt.-%, more preferably 43.0 to 57.0 wt.-%, of the polypropylene homopolymer fraction (PPH). In the present invention, the PPH is a polypropylene homopolymer in which preferably only propylene units are detectable (e.g. determined with $^{13}$C NMR spectroscopy). However, a skilled person and the present invention appreciates that production methods commonly employed in the art may result in contamination with comonomers, especially in case a prepolymerization step using comonomer(s) and/or nucleating agent monomer(s) is applied. Note that in the present invention, a prepolymerization is not considered to represent a main polymerization step of its own and the amount and properties (such as comonomer content etc.) of a prepolymer fraction produced in a prepolymerization step is counted to the amount (wt.-%) and properties of the main polymer fraction unless stated otherwise. In the present invention, the term polypropylene homopolymer is thus intended to refer to the constitution of the main polymerization fraction excluding an optional prepolymer fraction. That means that for instance the main polypropylene homopolymer fraction may be produced by supply of only propylene units (as polymerizing monomers) to give a propylene homopolymer fraction, while the prepolymer may be produced using propylene and comonomer(s) such as nucleating agent monomers as described later. In this case, although the monomer of a prepolymer fraction, if present, is accounted by definition to the main polypropylene homopolymer fraction, the PPH polypropylene homopolymer is still classified as homopolymer if the main polypropylene fraction is a homopolymer. Further, even though it is usually desired to keep such contaminations at a low level (i.e. in trace amounts), the homopolymer may contain certain amounts of contaminate comonomers, e.g. alpha-olefin comonomers, such as e.g. derived from prepolymerization. As such, the term homopolymer, as used herein, refers to a polypropylene polymer containing at least 99.0 wt.-%, preferably at least 99.8 wt.-%, more preferably at least 99.9 wt.-%, most preferably 100 wt.-% of propylene units (e.g. determined by quantitative $^{13}$C NMR spectroscopy), as long as the claimed requirements of the PPH as well as that of the rTPO are satisfied.

Preferably, the PPH forms a matrix phase of the rTPO. The PPH may have an $MFR_2$, according to ISO 1133 at 230°C and 2.16 kg load, in the range of 2.00 to 7.00 g/10 min, preferably 2.50 to 6.00 g/10 min, but is not limited thereto. The PPH is preferably formed in a loop reactor in the presence of a Ziegler-Natta catalyst.

The rTPO of the first embodiment comprises, based on the total weight of the rTPO, 30.0 to 45.0 wt.-%, preferably 30.0 to 42.0 wt.-%, more preferably 31.0 to 41.0 wt.-%, most preferably 34.0 to 41.0 wt.-%, of the random ethylene/-propylene (C2/C3) polymer fraction (rEP).

Preferably, also the rEP forms a matrix phase of the rTPO together with the PPH. The rEP may have an $MFR_2$, according to ISO 1133 at 230°C and 2.16 kg load, in the range of 0.20 to 1.80 g/10 min, preferably 0.30 to 1.00 g/10 min, but is not limited thereto. The rEP is preferably formed in a gas phase reactor in the presence of a Ziegler-Natta catalyst.

Preferably, the random ethylene/propylene (C2/C3) polymer fraction (rEP) of the rTPO of the first embodiment has a C2 content ($C2_{rEP}$), as determined by quantitative NMR according to the description, of 6.00 to 12.00 wt.-%, more preferably 6.50 to 10.50 wt.-%. In this case, due to suitably and favorably adjusting the C2 content of the second polymer fraction constituting a matrix phase, the effects of the present invention are more pronounced and/or their achievement is facilitated by suitably setting the compatibility of the matrix phase of the rTPO to the elastomeric dispersed phase.

In the present invention, the rEP is formed predominantly of ethylene and propylene units, but may contain other units of $\alpha$-olefins with 4-10 carbon atoms. In particular, the rEP refers to a polypropylene polymer containing at least 90.0 wt.-%, preferably at least 95.0 wt.-%, more preferably at least 99.0 wt.-%, most preferably 100 wt.-% of ethylene and propylene units (e.g. determined by quantitative $^{13}$C NMR spectroscopy), so that the rEP may be a copolymer consisting of ethylene and propylene units. The monomer units are distributed randomly.

The rTPO of the first embodiment comprises, based on the total weight of the rTPO, 13.0 to 24.0 wt.-%, preferably 14.0 to 22.0 wt.-%, of a C2C3 elastomeric propylene copolymer fraction (EPC).

Preferably, the EPC forms a dispersed phase (elastomeric phase) of the rTPO, that is particles dispersed in the polymer matrix. The EPC may have an $MFR_2$, according to ISO 1133 at 230°C and 2.16 kg load, in the range of 1.00 to 20.00 g/10 min, preferably 1.20 to 15.00 g/10 min, but is not limited thereto. The EPC is preferably formed in a gas phase reactor in the presence of a Ziegler-Natta catalyst.

Preferably, the C2C3 elastomeric propylene copolymer fraction (EPC) of the rTPO of the first embodiment has a C2 content ($C2_{EPC}$), as determined by quantitative NMR according to the description, of 40.0 wt.-% to 75.00 wt.-%, preferably 41.00 to 70.00 wt.-%, more preferably 42.00 to 65.00 wt.-%. In this case, due to suitably and favorably adjusting the C2 content of the elastomeric polymer fraction which is dispersed in the matrix phase, the effects of the present invention are more pronounced and/or their achievement is facilitated.

In the present invention, the EPC is formed predominantly of ethylene and propylene units, but may contain other units of $\alpha$-olefins with 4-10 carbon atoms. In particular, the EPC refers to a polypropylene polymer containing at least 90.0 wt.-%, preferably at least 95.0 wt.-%, more preferably at least 99.0 wt.-%, most preferably 100 wt.-% of ethylene and propylene units (e.g. determined by quantitative $^{13}$C NMR spectroscopy), so that the EPC may be a copolymer consisting of ethylene and propylene units.

The polymerization method of the rTPO of the first embodiment is not especially limited as long as the essential characteristics (and preferably also the preferred characteristics) of the rTPO and its polymer fractions as described herein are obtained.

Preferably, the rTPO of the first embodiment is (thus having the characteristics of) a reactor blend made in a three-stage polymerization process applying a slurry reactor (SR) - gas phase reactor (GPR1) - gas phase reactor (GPR2) cascade, such that the PPH is made in the SR, the rEP is made in the GPR1 and the EPC is made in the GPR2, preferably in the presence of a Ziegler Natta catalyst system, the PPH and rEP forming a matrix of the rTPO in which the EPC is dispersed. A more detailed description regarding the polymerization method of the rTPO is given in the context of the following 'Method for producing the impact modifier (rTPO)'.

The reactor thermoplastic polyolefin (rTPO) according to a second embodiment is a reactor blend made in a four-stage polymerization process. The reactor thermoplastic polyolefin (rTPO) of the second embodiment preferably comprises, based on the total weight of the rTPO, the following fractions:

(B1) 35.0 to 70.0 wt.-% of a polypropylene homopolymer fraction (PPH),
(B2) 20.0 to 50.0 wt.-% of a random ethylene/propylene (C2/C3) polymer fraction (rEP),
(B3) 5.0 to 25.0 wt.-% of a first C2C3 elastomeric propylene copolymer fraction (EPC), and
(B4) 4.0 to 20.0 wt.-% of a second C2C3 elastomeric propylene copolymer fraction (EEPC).

Preferably, the rTPO of the second embodiment essentially consist of the PPH, the rEP, the EPC and the EEPC (essentially consists meaning that the summed content thereof is 95.0 wt.-% or more based on the total weight of the rTPO). The summed content of PPH, rEP, EPC and EEPC in the rTPO is preferably 96.0 wt.-% or more, 97.0 wt.-% or more, 98.0 wt.-% or more, or 99.0 wt.-% or more, and may be even 100 wt.-%. For example, the summed content of PPH, rEP, EPC and EEPC in the rTPO may be in the range of from 95.0 wt.-% to 100 wt.-%, preferably 100 wt.-%. By applying the above-mentioned configuration of the rTPO of the second embodiment, it is easier to accomplish the favorable balance between stiffness and impact strength and this balance is more pronounced.

The rTPO of the second embodiment comprises, based on the total weight of the rTPO, 35.0 to 70.0 wt.-%, preferably 40.0 to 68.0 wt.-%, more preferably 42.0 to 62.0 wt.-%, of the polypropylene homopolymer fraction (PPH). In the present invention, the considerations regarding the PPH in the rTPO of the first embodiment apply in an analogous manner to the PPH in the rTPO of the second embodiment.

Preferably, the PPH forms a matrix phase of the rTPO. The PPH may have an $MFR_2$, according to ISO 1133 at 230°C and 2.16 kg load, in the range of 2.00 to 10.00 g/10 min, preferably 2.50 to 8.00 g/10 min or 3.0 to 7.0 g/10 min, but is not limited thereto. The PPH is preferably formed in a loop reactor in the presence of a Ziegler-Natta catalyst.

The rTPO of the second embodiment comprises, based on the total weight of the rTPO, 20.0 to 50.0 wt.-%, preferably 22.0 to 45.0 wt.-%, more preferably 24.0 to 40.0 wt.-% of the random ethylene/propylene (C2/C3) polymer fraction (rEP).

Preferably, also the rEP forms a matrix phase of the rTPO together with the PPH. The rEP may have an $MFR_2$, according to ISO 1133 at 230°C and 2.16 kg load, in the range of 0.05 to 1.00 g/10 min, more preferably 0.10 to 0.80 g/10 min, 0.15 to 0.60 g/10 min or 0.20 to 0.50 g/10 min, but is not limited thereto. The rEP is preferably formed in a gas phase reactor in the presence of a Ziegler-Natta catalyst.

Preferably, the random ethylene/propylene (C2/C3) polymer fraction (rEP) of the rTPO of the first embodiment has a C2 content ($C2_{rEP}$), as determined by quantitative NMR according to the description, of 6.00 to 12.00 wt.-%, more preferably 6.50 to 10.50 wt.-%. In this case, due to suitably and favorably adjusting the C2 content of the second polymer fraction constituting a matrix phase, the effects of the present invention are more pronounced and/or their achievement is facilitated by suitably setting the compatibility of the matrix phase of the rTPO to the elastomeric dispersed phase.

In the present invention, the rEP is formed predominantly of ethylene and propylene units, but may contain other units of α-olefins with 4-10 carbon atoms. In particular, the rEP refers to a polypropylene polymer containing at least 90.0 wt.-%, preferably at least 95.0 wt.-%, more preferably at least 99.0 wt.-%, most preferably 100 wt.-% of ethylene and propylene units (e.g. determined by quantitative $^{13}$C NMR spectroscopy), so that the rEP may be a copolymer consisting of ethylene and propylene units. The monomer units are distributed randomly.

The rTPO of the second embodiment comprises, based on the total weight of the rTPO, 5.0 to 25.0 wt.-%, preferably 8.0 to 20.0 wt.-%, more preferably 10.0 to 17.0 wt.-%, of a C2C3 elastomeric propylene copolymer fraction (EPC).

Preferably, the EPC forms a dispersed phase (elastomeric phase) of the rTPO, that is particles dispersed in the polymer matrix. The EPC may have an $MFR_2$, according to ISO 1133 at 230°C and 2.16 kg load, in the range of 3.0 to 25.0 g/10 min, preferably 4.0 to 12.0 g/10 min, 4.5 to 10.0 g/10 min, or 5.0 to 9.0 g/10 min, but is not limited thereto. The EPC is preferably formed in a gas phase reactor in the presence of a Ziegler-Natta catalyst.

Preferably, the C2C3 elastomeric propylene copolymer fraction (EPC) of the rTPO of the second embodiment has a C2 content ($C2_{EPC}$), as determined by quantitative NMR according to the description, of 40.00 to 75.00 wt.-%, more preferably 41.00 to 70.00 wt.-%, most preferably 42.00 to 65.00 wt.-%. In this case, due to suitably and favorably adjusting the C2 content of the first elastomeric polymer fraction which is dispersed in the matrix phase, the effects of the present invention are more pronounced and/or their achievement is facilitated.

In the present invention, the EPC is formed predominantly of ethylene and propylene units, but may contain other units of α-olefins with 4-10 carbon atoms. In particular, the EPC refers to a polypropylene polymer containing at least 90.0 wt.-%, preferably at least 95.0 wt.-%, more preferably at least 99.0 wt.-%, most preferably 100 wt.-% of ethylene and propylene units (e.g. determined by quantitative $^{13}$C NMR spectroscopy), so that the EPC may be a copolymer consisting of ethylene and propylene units.

The rTPO of the second embodiment comprises, based on the total weight of the rTPO, 4.0 to 20.0 wt.-%, preferably 5.0 to 15.0 wt.-%, more preferably 5.5 to 12.0 wt.-%, of a second C2C3 elastomeric propylene copolymer fraction (EEPC).

Preferably, the EEPC forms a dispersed phase (elastomeric phase) of the rTPO, that is particles dispersed in the polymer matrix, together with the first C2C3 ethylene propylene copolymer fraction (EPC). The EEPC may have an $MFR_2$, according to ISO 1133 at 230°C and 2.16 kg load, in the range of 0.5 to 10.0 g/10 min, preferably 0.7 to 8.0 g/10 min, 0.9 to 6.0 g/10 min, or 1.0 to 5.0 g/10 min, but is not limited thereto. The EEPC is preferably formed in a gas phase reactor in the presence of a Ziegler-Natta catalyst. The EEPC has a different content in C2 as compared to the EPC, and the difference between the C2 content of the EEPC and the C2 content of the EPC is preferably 1 wt.-% or more.

Preferably, the second C2C3 elastomeric propylene copolymer fraction (EEPC) of the rTPO of the second embodiment has a C2 content ($C2_{EEPC}$), as determined by quantitative NMR according to the description, of 40.00 to 75.00 wt.-%, more preferably 41.00 to 70.00 wt.-%, most preferably 42.00 to 65.00 wt.-%. In this case, due to suitably and favorably adjusting the C2 content of the second elastomeric polymer fraction which is dispersed in the matrix phase, the effects of the present invention are more pronounced and/or their achievement is facilitated.

In the present invention, the EEPC is formed predominantly of ethylene and propylene units, but may contain other units of $\alpha$-olefins with 4-10 carbon atoms. In particular, the EEPC refers to a polypropylene polymer containing at least 90.0 wt.-%, preferably at least 95.0 wt.-%, more preferably at least 99.0 wt.-%, most preferably 100 wt.-% of ethylene and propylene units (e.g. determined by quantitative $^{13}$C NMR spectroscopy), so that the EEPC may be a copolymer consisting of ethylene and propylene units.

The polymerization method of the rTPO of the second embodiment is not especially limited as long as the essential characteristics (and preferably also the preferred characteristics) of the rTPO and its polymer fractions as described herein are obtained.

Preferably, the rTPO of the second embodiment is (thus having the characteristics of) a reactor blend made in a four-stage polymerization process preferably applies a slurry reactor (SR) - gas phase reactor (GPR1) - gas phase reactor (GPR2) - gas phase reactor (GPR3) cascade, such that the PPH is made in the SR, the rEP is made in the GPR1, the EPC is made in the GPR2, and the EEPC is made in the GPR3, preferably in the presence of a Ziegler Natta catalyst system, the PPH and rEP forming a matrix of the rTPO in which the EPC and the EEPC are dispersed. A more detailed description regarding the polymerization method of the rTPO is given in the context of the following 'Method for producing the impact modifier (rTPO)'.

The present invention can achieve the herein described envisaged beneficial technical effects by using the impact modifier which essentially consists, i.e. contains at least 94.000 wt.-%, of the reactor thermoplastic polyolefin (rTPO). The impact modifier may optionally comprise, based on the total weight of the impact modifier, up to 6.000 wt.-%, preferably 0.010 to 3.500 wt.-%, more preferably 0.025 to 2.500 wt.-%, more preferably 0.050 to 1.500 wt.-%, most preferably 0.075 to 0.750 wt.-%, additive(s), said additive(s) being preferably selected from the group consisting of antioxidants, acid scavenges, UV-stabilizers, antistatic agents, and slip agents and mixtures thereof. Notably, it is possible that two or more functions can be combined in the same molecule and such a constitution may be preferred to reduce the overall amount of additives. The additive(s) may be added to the composition in pure form or in the form of a masterbatch in a carrier resin. Where applicable and appropriate, the optional additive(s) may already be added during the polymerization of the rTPO. At least antioxidant(s), or at least antioxidant(s) and acid scavenger(s), may be present as additive(s). Such additives are well known in the art and ensure favorable stability and/or performance of the impact modifier in its designated application.

Preferably, the impact modifier (rTPO) comprises 0.0001 to 0.1000 wt.-% (1 to 1000 pm), preferably 0.0005 to 0.0500 wt.-% (5 to 500 ppm), more preferably 0.0008 to 0.0100 wt.-% (8 to 100 ppm) of polymeric $\alpha$-nucleating agent(s), based on the total weight of the rTPO including the $\alpha$-nucleating agent(s) taken as 100%. Preferably, the polymeric $\alpha$-nucleating agent(s) is/are at least one of poly(vinyl cyclohexane) and poly(vinyl cyclopentane). The polymeric $\alpha$-nucleating agent(s) may be added to the rTPO in pure form or in the form of a masterbatch in a carrier resin. Preferably, the polymeric $\alpha$-nucleating agent(s) are incorporated as a polymer fraction into the rTPO by means of pre-polymerization, more preferably by being pre-polymerized onto a Ziegler Natta catalyst system, as described herein. The impact modifier (rTPO) may further comprise 0.0010 to 3.0000 wt.-%, 0.0100 to 2.5000 wt.-%, 0.0100 to 2.0000 wt.-%, 0.0500 to 1.8000 wt.-%, or 0.1000 to 1.5000 wt.-% of non-polymeric nucleating agent(s), based on the total weight of the rTPO including the non-polymeric nucleating agent(s) taken as 100%. Preferably, the impact modifier (rTPO) is nucleated by polymeric $\alpha$-nucleating agent(s) only and does not require to contain non-polymeric nucleating agent(s).

If present, the non-polymeric nucleating agent(s) preferably include at least or preferably are $\alpha$-nucleating agent(s). The $\alpha$-nucleating agent(s) is(are) preferably particulate dispersive $\alpha$-nucleating agent(s), more preferably selected from the group consisting of low molecular weight organic type $\alpha$-nucleating agents, such as organic carboxylic acid salts, organophosphoric acid salts or combinations thereof, and inorganic type nucleating agents, such as carbonates, silicates, aluminates or alumosilicates, or combinations thereof. Examples include salts of monocarboxylic acids, such as sodium benzoate or aluminum tert-butylbenzoate, salts of di- or polycarboxylic acids, such as the disodium salt of bicyclo (2.2.1) heptane-2,3-dicarboxylic acid or the calcium salt of 1,2-cyclohexane dicarboxylicacid, and salts of diesters of phosphoric acid, such as sodium 2,2'-methylenebis (4,6,-di-tert-butylphenyl) phosphate or aluminium-hydroxy-bis[2,2'-methylene-bis(4,6-di-t-butylphenyl)phosphate]; in particular at least one of sodium benzoate, 1,3:2,4-bis-(3,4-dimethyl-benzylidene)-sorbitol, sodium-2,2'-methylenebis-(4,6-di-tert-butyl-phenyl)-phosphate, hydroxybis-(2,4,8,10-tetra-tert-butyl-6-hydroxy-12h-dibenzo- (d,g)(1,3,2)-dioxaphosphocin-oxidato)-aluminium, ADK STAB NA-21 (Adeka Palmarole, France), Hyperform HPN-20 E (Milliken, USA).

However, a skilled person and the present invention appreciates modifications e.g. in that the impact modifier comprises optional component(s) other than the above nucleating agent(s) and/or above additive(s), such as utilization agents, coloring agents, anti-block agents, processing aids, and modifiers commonly known in the art, as long as the claimed requirements of the impact modifier are satisfied. Thus, care must be taken not to add any optional component(s), which interfere with attaining the claimed properties of the impact modifier. In any case, the impact modifier preferably does not contain other polymer components than the rTPO (except for optional carrier polymer of a masterbatch and/or polymeric nucleating agent as discussed herein). That is, in the context of the present invention, a skilled person appreciates that e.g. the additive(s) and/or nucleating agent(s) (or optional other component(s)) can be added to the impact modifier in a polymer component in the form of a masterbatch (also referred to as carrier polymer of the masterbatch), while the carrier polymer of a masterbatch is preferably a polypropylene homopolymer. The amount of such masterbatch carrier polymer, if used, usually does not exceed 4.00 wt.-%, preferably is used in an amount of 3.00 wt.-% or less or 1.00 wt.-% or less, based on the total weight of the impact modifier.

Further, the process of compounding the rTPO with other component(s) such as additive(s) to obtain the impact modifier is in the skilled knowledge and the rTPO can for instance be obtained by mixing the rTPO and other component(s) such as the additive(s) before, during or after melting the rTPO, and/or the other component(s) may in the individual case be added or incorporated already during the polymerization of the rTPO. For mixing, a conventional compounding or blending apparatus, such as e.g. a Banbury® mixer, a 2-roll rubber mill, Buss-co-kneader, a single screw extruder e.g. with special mixing segments or a twin screw extruder may be used. The impact modified (rTPO) recovered from a compounding or blending apparatus (e.g. the extruder) can be in the form of pellets or powder.

**Method for producing the impact modifier (rTPO)**

In general, the impact modifier being a rTPO may be produced by a series of reactions to create an in-reactor blend of polymers which results in an arrangement comprising a matrix fraction (or matrix phase) and a dispersed fraction (dispersed phase). Each of matrix fraction and dispersed fraction may be formed of a single polymer or of two or more polymers. The rTPO is a reactor blend (in-reactor blend) made in a polymerization process (also referred to as polymerization method) comprising at least three stages or at least four stages, in the presence of a catalyst system. The catalyst system is preferably a Ziegler Natta catalyst system since this facilitates adjusting the properties of the rTPO in a favorable manner.

The polymerization by using a Ziegler Natta catalyst system may be effected in three, four or more, e.g. 3, 4 or more, polymerization reactors, using conventional polymerization techniques, e.g. gas phase, solution phase, slurry or bulk polymerization. A combination of slurry (or bulk) and at least two gas phase reactors (GPRs) may be used, particularly with the reactor sequence in the order of a slurry (or bulk) reactor and two or more, more preferably two or three, GPRs, optionally and preferably with a pre-polymerization reactor prior to the slurry (or bulk) reactor. Note that the pre-polymerization is not considered to represent a main polymerization step of its own. The polymerization may preferably further comprise pre-polymerizing the Ziegler-Natta catalyst system with a suitable monomer, preferably vinyl cyclohexane or vinyl cyclopentane, to produce a polymeric $\alpha$-nucleating agent. Note that the pre-polymerization to produce a polymeric $\alpha$-nucleating agent is also not considered to represent a main polymerization step of its own.

In the context of producing the impact modifier, the rTPO is preferably a reactor blend made in a three-stage polymerization process produced by a process comprising the steps of:

P1) Polymerizing propylene in the presence of a Ziegler-Natta type catalyst system in a first polymerization reactor, for producing the polypropylene homopolymer fraction (PPH) as a first polymer fraction (A1);

T1) Transferring the polymerization mixture comprising the Ziegler-Natta type catalyst system and the first polymer fraction from the first polymerization reactor to a second polymerization reactor;

P2) Polymerizing propylene and ethylene in the presence of the Ziegler-Natta type catalyst system in the second polymerization reactor for producing the random ethylene/propylene (C2/C3) polymer fraction (rEP) as a second polymer fraction (A2);

T2) Transferring the polymerization mixture comprising the Ziegler-Natta type catalyst system and the first and second polymer fractions from the second polymerization reactor to a third polymerization reactor;

P3) Polymerizing propylene and ethylene in the presence of the Ziegler-Natta type catalyst system in the third polymerization reactor for producing the C2C3 elastomeric propylene copolymer fraction (EPC) as a third polymer fraction (A3), which is dispersed in the first and second polymer fractions acting as matrix;

W1) Withdrawing the polymerization mixture comprising the Ziegler-Natta type catalyst system, the first, second and third polymer fractions (A1, A2, and A3) from the third polymerization reactor; and

O1) Obtaining the reactor thermoplastic polyolefin (rTPO) comprising the polypropylene homopolymer fraction (PPH) and the random ethylene/propylene (C2/C3) polymer fraction (rEP) as matrix and the C2C3 elastomeric propylene copolymer fraction (EPC) being dispersed in the matrix.

Alternatively, the rTPO is preferably a reactor blend made in a four-stage polymerization process produced by a process comprising the steps of:

P1) Polymerizing propylene in the presence of a Ziegler-Natta type catalyst system in a first polymerization reactor, for producing the polypropylene homopolymer fraction (PPH) as a first polymer fraction (A1);

T1) Transferring the polymerization mixture comprising the Ziegler-Natta type catalyst system and the first polymer fraction from the first polymerization reactor to a second polymerization reactor;

P2) Polymerizing propylene and ethylene in the presence of the Ziegler-Natta type catalyst system in the second polymerization reactor for producing the random ethylene/propylene (C2/C3) polymer fraction (rEP) as a second polymer fraction (A2);

T2) Transferring the polymerization mixture comprising the Ziegler-Natta type catalyst system and the first and second polymer fractions from the second polymerization reactor to a third polymerization reactor;

P3) Polymerizing propylene and ethylene in the presence of the Ziegler-Natta type catalyst system in the third polymerization reactor for producing the C2C3 elastomeric propylene copolymer fraction (EPC) as a third polymer fraction (A3), which is dispersed in the first and second polymer fractions acting as matrix;

T3) Transferring the polymerization mixture comprising the Ziegler-Natta type catalyst system and the first, second and third polymer fractions from the third polymerization reactor to a fourth polymerization reactor;

P4) Polymerizing propylene and ethylene in the presence of the Ziegler-Natta type catalyst system in the fourth polymerization reactor for producing the second C2C3 elastomeric propylene copolymer fraction (EEPC) as a fourth polymer fraction (B4), which is dispersed in the matrix;

W2) Withdrawing the polymerization mixture comprising the Ziegler-Natta type catalyst system, the first, second, third and fourth polymer fractions from the fourth polymerization reactor; and

O2) Obtaining the reactor thermoplastic polyolefin (rTPO) comprising the polypropylene homopolymer fraction (PPH) and the random ethylene/propylene (C2C3) polymer fraction (rEP) as matrix and the first C2C3 elastomeric propylene copolymer fraction (EPC) as well as the second C2C3 elastomeric propylene copolymer fraction (EEPC) being dispersed in the matrix.

Preferably, the process further comprising a pre-polymerization step prior to the first (main) polymerization step in the first (main) polymerization reactor, wherein a mixture of the Ziegler-Natta catalyst system and a polypropylene pre-polymer produced in a pre-polymerization reactor is obtained and subsequent to the pre-polymerization, the mixture of the Ziegler-Natta catalyst system and the polypropylene pre-polymer produced in the pre-polymerization reactor is transferred to the first polymerization reactor. That is, the main polymerization steps may preferably be preceded by the pre-polymerization step. The purpose of the pre-polymerization is to polymerize a small amount of polymer onto the catalyst at a low temperature and/or a low monomer concentration. By pre-polymerization, it is possible to improve the performance of the catalyst in slurry and/or modify the properties of the final polymer. The pre-polymerization step is preferably conducted in slurry and the amount of polymer produced in a pre-polymerization step is counted to the amount (wt.-%) of the polymer fraction produced in the first main polymerization reactor (i.e. PPH). It is understood that the amount of polymer produced in the pre-polymerization may be within 0.5 to 5.0 wt.-%, preferably 1.0 to 2.5 wt.-%, in respect to the final rTPO. Further, in a preferred case that the rTPO is nucleated by polymeric $\alpha$-nucleating agent(s) being incorporated as a polymer fraction into the rTPO by means of pre-polymerization, more preferably by being pre-polymerized onto a Ziegler Natta catalyst system, the amount of the polymeric $\alpha$-nucleating agent fraction is counted to the amount (wt.-%) of the polymer fraction produced in the first main polymerization reactor (i.e. PPH).

Preferably, the first polymerization reactor is a slurry reactor (SR) (e.g. a loop reactor), the second polymerization reactor is a first gas phase reactor (GPR1) and the third polymerization reactor is a second reactor gas phase reactor (GPR2). In case of a four reactor set up, the fourth polymerization reactor is preferably a third gas phase reactor (GPR3).

Therefore, the rTPO is preferably a reactor blend made in a three-stage polymerization process applying a slurry reactor (SR) - gas phase reactor (GPR1)

- gas phase reactor (GPR2) cascade, such that the PPH is made in the SR, the rEP is made in the GPR1 and the EPC is made in the GPR2, preferably in the presence of a Ziegler Natta catalyst system, or a reactor blend made in a four-stage polymerization process applying a slurry reactor (SR) - gas phase reactor (GPR1)

- gas phase reactor (GPR2) -- gas phase reactor (GPR3) cascade, such that the PPH is made in the SR, the rEP is made in the GPR1, the EPC is made in the GPR2 and the EEPC is made in the GPR3, preferably in the presence of a Ziegler Natta catalyst system and applying pre-polymerization. The reactor splits in the different reactors during the polymerization method is preferably adjusted such as to provide the different polymer fractions in the preferred amounts as specified above.

Such a process is in general described inter alia in WO 2017/198633 A1, WO 2017/148970 A1, WO 2020/207825 A1 and details of how to prepare Ziegler Natta catalysed bi- and multimodal polymers can be found in these references. A suitable and preferred process is the Borstar® process. Another suitable slurry-gas phase polymerization process is the Speripol® process of Basell.

That is, the components (polymer fractions) are preferably produced under different polymerization conditions resulting in different properties of the polymer fractions to result in bi- or multimodal polymers. The term "bimodal" or "multimodal" the context of bi- or multimodal polymers means herein bi- or multi-modality with respect to a polymer property such as melt flow rate ($MFR_2$) (e.g. the first fraction (PPH) and a second fraction (rEP) have different $MFR_2$ values), density, Mw, comonomer, comonomer content etc.

Conditions for operating a slurry reactor (e.g. loop reactor) and a GPR and how to adjust and fine-tune final polymer properties are known to the skilled person or can be determined by orientating experimentation. Preferred operation conditions in the slurry reactor may be as follows:

- temperature within the range of 55 to 95°C, more preferably 60 to 90°C, most preferably 65 to 85°C, e.g. 75±5°C,
- pressure within the range of 30 to 75 barg, more preferably 40 to 70 barg, most preferably 45 to 60 barg, e.g. 53±5 barg,
- hydrogen can be added for controlling the molar mass in a manner known per se.

Preferred operation conditions in the GPR may be as follows:

- temperature within the range of 50 to 130°C, more preferably 60 to 100°C, most preferably 70 to 90°C, e.g. 80±5°C,
- pressure within the range of 5 to 45 barg, more preferably 15 to 40 barg, e.g. 23±5 barg,
- hydrogen can be added for controlling the molar mass in a manner known per se.

The rTPO is preferably prepared in the presence of a Ziegler-Natta catalyst system as descried in the following "Catalyst".

**Catalyst**

As said above, the rTPO is preferably prepared in the presence of a Ziegler-Natta catalyst system (which may also be abbreviated as Ziegler-Natta catalyst).

There exists a crucial difference in the chain-microstructure between polypropylenes produced by a single site catalyst such as a metallocene catalyst and a Ziegler-Natta catalyst. The chain regularity of metallocene-based polypropylene is usually reduced by stereo- and regio-defects, whereas the chain regularity of Ziegler-Natta based polypropylenes is only reduced by stereo defects usually leading to highly isotactic polypropylene polymer. There is also a differences in the uniformity of the concentrations of defects (such as stereo- and/or region-errors) in relation to the kind of catalyst used.

The Ziegler-Natta catalyst system preferably comprises

(a) a Ziegler-Natta catalyst (ZN-C) comprising compounds (TC) of a transition metal of Group 4 to 6 (according to IUPAC), a Group 2 metal compound (MC) and an internal donor (ID),
(b) a co-catalyst (Co).

The Ziegler-Natta catalyst system preferably further comprises an external donor (ED).

The Ziegler-Natta catalyst (system) is preferably present in the first polymerization stage, i.e. in a pre-polymerization or in a first main polymerization (e.g. when preparing the PPH). Further, as already stated above, polymeric $\alpha$-nucleating agent(s) may preferably be pre-polymerized onto a Ziegler Natta catalyst system, which is known as BNT-technology and with regard to the BNT-technology, reference is made to WO2017/148970 A1 and the respective information provided therein.

It is particularly preferred that the rTPO is polymerized (prepared) in the presence of a Ziegler-Natta catalyst that does not comprise phthalate-based electron donors. As such, it is preferred that the rTPO is free of phthalic esters and their decomposition products. Suitable non-phthalate Ziegler-Natta type catalysts are inter alia described in WO 2014/187687 A1, WO2017/198633 A1 and WO2017/148970 A1, see e.g. the Examples of these documents.

The catalyst used in the present invention is thus preferably a solid Ziegler-Natta catalyst (ZN-C), which comprises compounds (TC) of a transition metal of Group 4 to 6 (IUPAC), like titanium, a Group 2 metal compound (MC), like a magnesium, and an internal donor (ID) preferably being a non-phthalic compound, more preferably a non-phthalic acid ester, still more preferably being a diester of non-phthalic dicarboxylic acids as described in more detail below. Thus, the catalyst is preferably fully free of (undesired) phthalic compounds. Further, the solid catalyst is preferably free of any external support material, like silica or $MgCl_2$, but the catalyst is self-supported. A self-supported catalyst is not necessarily free of magnesium halides, since these are formed during the reaction between the magnesium compound and $TiCl_4$; however, the presence of magnesium halides as external support media is preferably excluded.

The Ziegler-Natta catalyst (ZN-C) can be further defined by the way as obtained. Accordingly, the Ziegler-Natta catalyst (ZN-C) is preferably obtained by a process comprising the steps of

a)

a1) providing a solution of at least a Group 2 metal alkoxy compound (Ax) being the reaction product of a Group 2 metal compound (MC) and an alcohol (A) comprising in addition to the hydroxyl moiety at least one ether moiety optionally in an organic liquid reaction medium; or

a2) a solution of at least a Group 2 metal alkoxy compound (Ax') being the reaction product of a Group 2 metal compound (MC) and an alcohol mixture of the alcohol (A) and a monohydric alcohol (B) of formula ROH, optionally in an organic liquid reaction medium; or

a3) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; and

b) adding said solution from step a) to at least one compound (TC) of a transition metal of Group 4 to 6 and

c) obtaining the solid catalyst component particles,

and adding a preferably non-phthalic internal electron donor (ID) at any (arbitrary) step prior to step c).

The internal donor (ID) or precursor thereof is added preferably to the solution of step a).

According to the procedure above, the Ziegler-Natta catalyst (ZN-C) can be obtained via precipitation method or via emulsion (liquid/liquid two-phase system) - solidification method depending on the physical conditions, especially temperature used in steps b) and c). In both methods (precipitation or emulsion-solidification) the catalyst chemistry is the same.

In precipitation method combination of the solution of step a) with at least one transition metal compound (TC) in step b) is carried out and the whole reaction mixture is kept at least at 50°C, more preferably in the temperature range of 55 to 110°C, more preferably in the range from 70 to 100°C, to secure full precipitation of the catalyst component in form of a solid particles (step c).

In emulsion - solidification method in step b) the solution of step a) is typically added to the at least one transition metal compound (TC) at a lower temperature, such as from -10 to below 50°C, preferably from -5 to 30°C. During agitation of the emulsion, the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C. The catalyst prepared by emulsion - solidification method is preferably used in the present invention.

In a preferred embodiment in step a) the solution of a2) or a3) are used, i.e. a solution of (Ax') or a solution of a mixture of (Ax) and (Bx). Preferably the Group 2 metal (MC) is magnesium.

The magnesium alkoxy compounds (Ax), (Ax') and (Bx) can be prepared *in situ* in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_6$ -$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$ - $C_{20}$ alkyl, preferably $C_2$ - $C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably, dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"(OH)$_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and s is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt.-% solution in a solvent as indicated above. Typical commercially available Mg compound, especially dialkyl magnesium solutions are 20 - 40 wt.-% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 μm, preferably 10 to 100 μm. Particles preferably are compact with low porosity and have surface area below 20 g/m², more preferably below 10 g/m². Typically the amount of Ti is 1 to 6 wt.-%, the amount of Mg is 10 to 20 wt.-% and the amount of donor is 10 to 40 wt.-% of the catalyst composition.

Detailed description of preparation of catalysts is disclosed in WO2017/148970 A1, WO2012/007430 A1, EP2610271 A1, EP261027 A1 and EP2610272 A1 which are incorporated here by reference.

The Ziegler-Natta catalyst (ZN-C) is preferably used in association with an alkyl aluminum cocatalyst and optionally external donors.

As further component in the instant polymerization process, an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably, both $R^3$ and $R^4$ are the same, yet more preferably both $R^3$ and $R^4$ are an ethyl group.

Especially preferred external donors (ED) are the dicyclopentyl dimethoxy silane donor (D donor) or the cyclohexylmethyl dimethoxy silane donor (C-Donor). In addition to the Ziegler-Natta catalyst (ZN-C) and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably, the ratio between the co-catalyst (Co) and the external donor (ED) [Co/ED] and/or the ratio between the co-catalyst (Co) and the transition metal (TM) [Co/TM] should be adjusted within certain limits. More specifically,

(a) the mol-ratio of co-catalyst (Co) to external donor (ED) [Co/ED] should preferably be in the range from 5 to 45, preferably is in the range from 5 to 35, more preferably is in the range from 5 to 25; and optionally

(b) the mol-ratio of co-catalyst (Co) to titanium compound (TC) [Co/TC] should preferably be in the range from above 80 to 500, preferably is in the range from 100 to 350, still more preferably is in the range from 120 to 300.

When employing a Ziegler-Natta catalyst system in a multi-reactor arrangement as pointed out above, it is preferred that at least part of, preferably all of, the ZN-C be fed into the first polymerization reactor and is transferred with the polymer (slurry) obtained in the first polymerization reactor into the subsequent reactors, should any subsequent reactors be used. If the process covers also a pre-polymerization step, it is preferred that at least part of, preferably all of, the Ziegler-Natta catalyst (ZN-C) be fed into the pre-polymerization reactor. Subsequently the pre-polymerization product containing the Ziegler-Natta catalyst (ZN-C) is transferred into the first polymerization reactor. Co-catalyst and, if present, external donor, are preferably fed together with the ZN-C.

A preferable catalyst system for producing the impact copolymer of the present invention (as well as a production method for such a catalyst system) is described in WO2017/148970 A1 and EP4141068 A1, which is herewith incorporated by reference.

## Use and Articles

The present invention relates to the use of a heterophasic reactor thermoplastic polyolefin (rTPO) being a reactor blend made in a three-stage or four-stage polymerization process and having the following properties:

a melting temperature $T_m$, according to DSC, in the range of 155.0 to 170.0°C,
a soluble fraction (SF) and a crystalline fraction (CF), both determined by CRYSTEX measurement according to the description, wherein the soluble fraction (SF) is present in an amount of 15.0 to 40.0 wt.-%,
a total ethylene (C2) content, determined by CRYSTEX measurement calibrated with NMR according to the description, in the range of 9.0 to 17.0 wt.-%,

of which an ethylene content of the soluble fraction ($C2_{SF}$) is in the range of 22.0 to 48.0 wt.-% and wherein an intrinsic viscosity of the soluble fraction ($IV_{SF}$), determined by CRYSTEX measurement according to the example section, is in the range of 1.50 to 4.00 dL/g, and
of which an ethylene content of the crystalline fraction ($C2_{CF}$) is in the range of 1.5 to 8.5 wt.-% and wherein an intrinsic viscosity of the crystalline fraction ($IV_{CF}$), determined by CRYSTEX measurement according to the example section, is in the range of 2.00 to 4.50 dL/g,
wherein a ratio of the intrinsic viscosity of the soluble fraction ($IV_{SF}$) to the intrinsic viscosity of the crystalline fraction ($IV_{CF}$) ($IV_{SF}/IV_{CF}$) is less than 1.0, and

a melt flow rate $MFR_2$, according to ISO 1133 at 230°C and 2.16 kg load, in the range of 0.5 to 8.0 g/10 min,

as an impact modifier (B) for improving the impact strength of a polyolefin (PO)-based recyclate (A).

The heterophasic reactor thermoplastic polyolefin (rTPO) (impact modifier) according to the use of the present invention refers to the heterophasic reactor thermoplastic polyolefin (rTPO) as described in detail above, so that a detailed description is dispensable at that point. Further, the rTPO is preferably used to improve the impact strength of the polyolefin (PO)-based recyclate (A) as described above, so that a detailed description is dispensable at that point.

By using the rTPO to improve the impact strength of a polyolefin (PO)-based recyclate (A), a recyclate-based polymer composition with improved impact strength without compromising on the stiffness can be provided. Preferably, the rTPO impact modifier is used in an amount of 3.0 to 45.0 wt.-%, preferably 3.0 to 22.0 wt.-%, more preferably 5.0 to 20.0 wt.-%, most preferably 10.0 to 18.0 wt.-%, whereas the polyolefin (PO)-based recyclate is used in an amount of 55.0 to 97.0 wt.-%, preferably 78.0 to 97.0 wt.-%, more preferably 79.0 to 95.0 wt.-%, most preferably 80.0 to 90.0 wt.-%, the contents based on the total weight of the resultant recyclate-based polymer composition.

By means of the use of the rTPO as an impact modifier (B) according to the present invention, it is possible to attain an increase in impact strength, Charpy notched ISO 179-1 at 23°C, as compared to an identical recyclate-based polymer composition except for not containing the rTPO as the impact modifier (B), in the range of 28.0 to 55.0%, preferably 29.0 to 50.0%.

Further, the recyclate-based polymer composition of the present invention may be used for producing a film. Preferably, the use comprises obtaining a film by casting or extrusion. The recyclate-based polymer composition of the present invention may be used for producing a molded article. The use preferably comprises obtaining the molded article by blow molding or injection molding, more preferably by injection molding.

The present invention thus also refers to a film or article, comprising the recyclate-based polymer composition of the present invention. Preferably, at least 80.0 wt.-%, more preferably at least 90.0 wt.-%, more preferably at least 95.0 wt.-% of the film or article is made of the recyclate-based polymer composition described above and it also possible and preferred that the film or article is made of, i.e. consists of the recyclate-based polymer composition.

Appropriate film forming and molding processes for preparing the molded article of the present invention are commonly known to the skilled person. The film may e.g. be a packaging film for consumer goods or medical packaging, preferably obtained by casting or extrusion, such as extrusion blow molding. The article is preferably a molded article, more preferably an injection molded article.

**Measuring Methods**

**Melt flow rate (MFR)**

The melt flow rate ($MFR_2$) of propylene based polymers is measured at 230°C with a load of 2.16 kg according to ISO 1133. Calculation of the $MFR_2$ of a polymer fraction (e.g. rEP), e.g. if it cannot be measured, because it cannot be isolated from the mixture, can be done in line with the principle and systematic of the formulas in WO 2017/148970 A1 (see section "calculations"); see also Kim McAuley's equation 25 in K. K. McAuley and J. F. McGregor: On-line Inference of Polymer Properties in an Industrial Polyethylene Reactor, AIChE Journal, June 1991 , Vol. 37, No, 6, pages 825-835).

**DSC analysis, melting temperature ($T_m$), melting enthalpy ($H_m$), crystallization temperature ($T_c$) and crystallization enthalpy ($H_c$)**

Melting peak temperatures ($T_m$), melting enthalpies ($H_m$), crystallization peak temperature ($T_c$) and crystallization enthalpy ($H_c$) was measured with a TA Instrument Q200 differential scanning calorimetry (DSC) on 5 to 7 mg samples. DSC was run according to ISO 11357 / part 3 / method C2 in a heat / cool / heat cycle with a scan rate of 10°C/min in the temperature range of -30 to +225°C. Crystallization peak temperature ($T_c$) and crystallization enthalpy ($H_c$) were determined from the cooling step, while melting peak temperature(s) ($T_m$) and melting enthalpy(ies) ($H_m$) were determined from the second heating step.

**Flexural Modulus (FM)**

The flexural modulus was determined according to ISO 178 method A (3-point bending test) on $80 \times 10 \times 4$ mm$^3$ specimens. Following the standard, a test speed of 2 mm/min and a span length of 16 times the thickness was used. The testing temperature was $23 \pm 2$°C. Injection molding was carried out according to ISO 19069-2 using a melt temperature of 230°C for all materials irrespective of material melt flow rate.

**Dynamic Mechanical Thermal Analysis (DMTA) - glass transition temperature ($T_g$) and Storage Modulus**

The glass transition temperature $T_g$ was determined by dynamic mechanical thermal analysis (DMTA) according to ISO 6721-7. The measurements are done in torsion mode on compression molded samples (35x10x1 mm$^3$) between -130°C and +160 °C with a heating rate of 2°C/min and a frequency of 1 Hz.

Storage modulus G' was determined at +23°C according ISO 6721-7. The measurements are the same as for $T_g$ in which it was calculated at the peaks of tan delta (=G''/G').

**Impact Strength (-10°C and 20°C)**

The impact strength of the heterophasic reactor thermoplastic polyolefin (rTPO) was determined from Charpy instrumented impact strength according to ISO 179-2 on V-notched specimen with a geometry of 80x10x4 mm$^3$ as set forth in ISO 179-1eA. Injection molding was carried out according to ISO 19069-2 using a melt temperature of 230°C for all materials irrespective of material melt flow rate.

**Impact Strength (-20°C and 23°C)**

The impact strength of the recyclate-based polymer composition and the polyolefin (PO)-based recyclate was determined from Charpy non-instrumented impact strength according to ISO 179-1 on V-notched specimen with a geometry of 80x10x4 mm$^3$ as set forth in ISO 179-1eA. Injection molding was carried out according to ISO 19069-2 using a melt temperature of 230°C for all materials irrespective of material melt flow rate.

**Comonomer content**

Quantitative $^{13}$C{$^1$H} NMR spectra were recorded in the solution-state using a Bruker Avance NEO 400 NMR spectrometer operating at 400.15 and 100.62 MHz for $^1$H and $^{13}$C respectively. All spectra were recorded using a $^{13}$C optimised 10 mm extended temperature probe head at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 60 mM solution of relaxation agent in solvent {8} and with approximately 3 mg BHT (2,6-di-tert-butyl-4-methylphenol CAS 128-37-0). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {3, 4}. A total of 6144 (6k) transients were acquired per spectra.

Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {7}.

The comonomer fraction was quantified using the method of Wang et. al. {6} through integration of multiple signals across the whole spectral region in the $^{13}$C{$^1$H} spectra. This method was chosen for its robust nature and ability to account for the presence of regiodefects when needed. Integral regions were slightly adjusted to increase applicability across the whole range of encountered comonomer contents.

For systems where only isolated ethylene in PPEPP sequences was observed the method of Wang et al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5 \, (S\beta\beta + S\beta\gamma + S\beta\delta + 0.5(S\alpha\beta + S\alpha\gamma))$$

Through the use of this set of sites the corresponding integral equation becomes:

$$E = 0.5 \, (I_H + I_G + 0.5(I_C + I_D))$$

using the same notation used in the article of Wang et al. {6}. Equations used for absolute propylene content were not modified.

The mole percent comonomer incorporation was calculated from the mole fraction:

$$E \, [mol\%] = 100 * fE$$

The weight percent comonomer incorporation was calculated from the mole fraction:

$$E \, [wt.\text{-}\%] = 100 * (fE * 28.06) / ( (fE * 28.06) + ((1\text{-}fE) * 42.08) )$$

Bibliographic references:

1) Busico, V., Cipullo, R., Prog. Polym. Sci. 26 (2001) 443.

2) Busico, V., Cipullo, R., Monaco, G., Vacatello, M., Segre, A.L., Macromolecules 30 (1997) 6251.

3) Zhou, Z., Kuemmerle, R., Qiu, X., Redwine, D., Cong, R., Taha, A., Baugh, D. Winniford, B., J. Mag. Reson. 187 (2007) 225.

4) Busico, V., Carbonniere, P., Cipullo, R., Pellecchia, R., Severn, J., Talarico, G., Macromol. Rapid Commun. 2007, 28, 1128.

5) Resconi, L., Cavallo, L., Fait, A., Piemontesi, F., Chem. Rev. 2000, 100, 1253.

6) Wang, W-J., Zhu, S., Macromolecules 33 (2000), 1157.

7) Cheng, H. N., Macromolecules 17 (1984), 1950.

8) Singh, G., Kothari, A., Gupta, V., Polymer Testing 28 5 (2009), 475.

9) Kakugo, M., Naito, Y., Mizunuma, K., Miyatake, T. Macromolecules 15 (1982) 1150.

10) Randall, J. Macromol. Sci., Rev. Macromol. Chem. Phys. 1989, C29, 201.

11) Resconi, L., Cavallo, L., Fait, A., Piemontesi, F., Chem. Rev. 2000, 100, 1253.

Calculation of the comonomer (e.g. ethylene) content of a polymer fraction (e.g. EPC), e.g. if it cannot be measured, because it cannot be isolated from the mixture, can be done in line with the principle and systematic of the formulas in WO 2017/148970 A1 (see section "calculations").

**CRYSTEX Method** - Determination of crystalline and soluble fractions and their respective properties (Intrinsic Viscosity (IV) and ethylene (C2) content)

Note: Crystallization extraction (CRYSTEX) analyses the polymeric part of each component, with non-polymeric parts, such as any fillers or particulate pigments, not contributing to the reported CRYSTEX data presented.

The crystalline (CF) and soluble fractions (SF) of the polypropylene compositions (PPC) as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centred at app. 2960 cm$^{-1}$) and the CH stretching vibration (2700-3000 cm$^{-1}$) that are serving for the determination of the concentration and the ethylene content in Ethylene-Propylene (EP) copolymers. The IR4 detector is calibrated with series of 8 EP copolymers with known ethylene content in the range of 2 wt.-% to 69 wt.-% (determined by $^{13}$C-NMR) and each at various concentrations, in the range of 2 and 13 mg/ml. To encounter for both features, concentration and ethylene content at the same time for various polymer concentration expected during Crystex analyses the following calibration equations were applied:

$$Conc = a + b*Abs(CH) + c*(Asb(CH))^2 + d*Abs(CH_3) + e*(Abs(CH_3)^2 + f*Abs(CH)*Abs(CH_3) \qquad \text{(Equation 1)}$$

$$CH_3/1000C = a + b*Abs(CH) + c* Abs(CH_3) + d * (Abs(CH_3)/Abs(CH)) + e*(Abs(CH_3)/Abs(CH))^2 \qquad \text{(Equation 2)}$$

The constants a to e for equation 1 and a to f for equation 2 were determined by using least square regression analysis.

The $CH_3/1000C$ is converted to the ethylene content in wt.-% using the following relationship:

$$\text{wt.-\% (ethylene in copolymer)} = 100 - CH_3/1000TC*0.3 \qquad \text{(Equation 3)}$$

Amounts of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XCS content in the range 2-31 wt.-%. A linear calibration curve is used.

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3 at 135°C. Calibration is achieved with various EP copolymers and PP polymers with IV = 2-4 dL/g. The determined calibration curve is linear.

The samples to be analyzed are weighed out in concentrations of 10mg/ml to 20 mg/ml. After automated filling of the vial with 1,2,4-trichlorbenzole (TCB) containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the $N_2$ atmosphere during dissolution.

For a PP composition containing inorganic fillers or pigments or any other non-TCB soluble polymeric substances removal of these is required. This can be done by hot filtration prior injection.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

**Examples**

The following Examples are included to demonstrate certain aspects and favorable embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

The rTPOs PP-IE1 and PP-IE4 according to the invention and PP-CE as comparative rTPO were prepared in a Borstar® PP pilot unit with sequential process comprising a pre-polymerization reactor, a loop reactor and two gas phase reactors (i.e. 3-main reactor set-up of loop+GPR1+GPR2) and the rTPOs PP-IE2 and PP-IE3 according to the invention were prepared in a Borstar® PP pilot unit with sequential process comprising a pre-polymerization reactor, a loop reactor and three gas phase reactors (i.e. 4-main reactor set-up of loop+GPR1+GPR2+GPR3). The reaction conditions are summarized in Table 1. Properties of the final polymer (powder form) and of the polymer fractions are also summarized in Table 1.

The catalyst used was a Ziegler-Natta catalyst (system) as used and described for the inventive examples of WO 2016/066446 A1, pre-polymerized with vinylcyclohexane to achieve nucleation with poly(vinylcyclohexane). Nucleation by pre-polymerization with vinylcyclohexane is described in EP 2 960 256 B1 and EP 2 960 279 B1 in detail. The catalyst systems defined above was used in combination with triethyl-aluminium (TEAL) as co-catalyst and dicyclopentadienyl-dimethoxy silane (donor D) as external donor.

Table 2 shows the properties of stabilized rTPO polymer pellets produced by compounding the rTPO polymer powders (99.8 wt.-%) with 0.075 wt.-% of antioxidant pentaerythritol tetrakis[3-[3,5-di-tert-butyl-4-hydroxyphenyl] propionate] (Irganox® 1010, CAS No: 6683-19-8, available from BASF), 0.075 wt.-% of antioxidant tris(2,4-di-tert-butylphenyl)phosphite (Irgafos® 168, CAS No: 31570-04-4, available from BASF) and 0.05 wt.-% of acid scavenger calcium stearate (Ceasit AV-FI, CAS No: 1592-23-0, available from Baerlocher).

Specifically, the rTPO polymer powders were each mixed with the above defined additives, and then compounded in a TSE 16 twin screw extruder, with a melt temperature 210°C, and production rate of 2 kg/h.

**Table 1**

| | | PP-IE1 | PP-IE4 | PP-CE | PP-IE2 | PP-IE3 |
|---|---|---|---|---|---|---|
| **Pre-polymerization** | | | | | | |
| pressure | bar(g) | 53 | 53 | 53 | 53 | 53 |
| temperature | °C | 20 | 20 | 20 | 20 | 20 |
| H2/C3 | mol/kmol | 0.74 | 0.74 | 0.74 | 0.74 | 0.74 |
| Al/donor | mol/mol | 40 | 40 | 40 | 40 | 40 |
| Donor/Ti | mol/mol | 10 | 10 | 10 | 10 | 10 |

(continued)

| Pre-polymerization | | | | | | |
|---|---|---|---|---|---|---|
| | | | | | | |
| **LOOP** | | | | | | |
| pressure | bar(g) | 53 | 53 | 53 | 53 | 53 |
| temperature | °C | 75 | 75 | 75 | 75 | 75 |
| H2/C3 | mol/kmol | 1.67 | 1.73 | 2.21 | 2.19 | 2.20 |
| residence time | h | 0.37 | 0.37 | 0.37 | 0.36 | 0.38 |
| | | | | | | |
| matrix split | wt.-% | 56 | 56 | 60 | 64 | 64 |
| product split | wt.-% | 46 | 46 | 49 | 51 | 51 |
| MFR (in/after LOOP) | g/10min | 4.31 | 3.62 | 5.32 | 5.32 | 5.32 |
| | | **PP-IE1** | **PP-IE4** | **PP-CE** | **PP-IE2** | **PP-IE3** |
| | | | | | | |
| **GPR1** | | | | | | |
| pressure | bar(g) | 21 | 21 | 21 | 21 | 21 |
| temperature | °C | 80 | 80 | 80 | 80 | 80 |
| C2/C3 | mol/kmol | 50.4 | 54.0 | 52.8 | 46 | 46 |
| H2/C3 | mol/kmol | 6.4 | 4.8 | 5.6 | 4.5 | 4.5 |
| residence time | h | 0.76 | 0.58 | 0.62 | 0.71 | 0.63 |
| | | | | | | |
| matrix split | wt.-% | 44 | 44 | 40 | 36 | 36 |
| product split | wt.-% | 37 | 37 | 33 | 29 | 29 |
| MFR (after GPR1) | g/10min | 1.92 | 1.50 | 1.98 | 1.98 | 1.98 |
| MFR (in GPR1) | g/10min | 0.69 | 0.49 | 0.45 | 0.35 | 0.35 |
| C2 (after GPR1) | wt.-% | 3.6 | 4.1 | 3.8 | 3.2 | 3.2 |
| C2 (in GPR1) | wt.-% | 8.2 | 9.3 | 9.5 | 8.6 | 8.6 |
| | | | | | | |
| **GPR2** | | | | | | |
| pressure | bar(g) | 23 | 23 | 23 | 23 | 23 |
| temperature | °C | 80 | 80 | 80 | 80 | 80 |
| C2/C3 | mol/kmol | 446 | 434 | 1827 | 439 | 431 |
| H2/C2 | mol/kmol | 304 | 314 | 490 | 303 | 315 |
| residence time | h | 1.25 | 1.23 | 1.20 | 1.22 | 1.23 |
| | | | | | | |
| GPR2/GPR3 split | wt.-% | - | - | - | 70 | 65 |
| product split | wt.-% | 17 | 17 | 18 | 14 | 13 |
| MFR (after GPR2) | g/10min | 1.9 | 1.8 | 2.7 | 2.3 | 2.6 |
| C2 (after GPR2) | wt.-% | 10.7 | 13.2 | 19.8 | 10.3 | 11.1 |
| C2 (in GPR2) | wt.-% | 45.4 | 57.6 | 92.5 | 50.8 | 59.8 |
| | | | | | | |

(continued)

| GPR3 | | | | | | |
|---|---|---|---|---|---|---|
| pressure | bar(g) | - | - | - | 25 | 24 |
| temperature | °C | - | - | - | 80 | 80 |
| C2/C3 | mol/kmol | - | - | - | 1798 | 1505 |
| H2/C2 | mol/kmol | - | - | - | 502 | 506 |
| residence time | h | - | - | - | 1.21 | 1.01 |
| | | | | | | |
| GPR2/GPR3 split | wt.-% | - | - | - | 30 | 35 |
| product split | wt.-% | - | - | - | 6 | 7 |
| MFR (after GPR3) | g/10min | - | - | - | 2.3 | 2.6 |
| C2 (after GPR3) | wt.-% | - | - | - | 12.4 | 12.7 |
| C2 (in GPR3) | wt.-% | - | - | - | 49.2 | 50.9 |

**Table 2**

| Final product pellet | | PP-IE1 | PP-IE4 | PP-CE | PP-IE2 | PP-IE3 |
|---|---|---|---|---|---|---|
| MFR2 | g/10min | 1.9 | 1.8 | 2.7 | 2.3 | 2.6 |
| To | °C | 126.2 | 126.4 | 126.3 | 126.6 | 126.5 |
| $H_c$ | J/g | 74 | 69 | 82 | 74 | 73 |
| $T_m$ | °C | 163.7 | 164.2 | 164.4 | 164.0 | 164.2 |
| $H_m$ | J/g | 75 | 71 | 86 | 76 | 74 |
| C2 content | wt.-% | 10.7 | 13.2 | 19.8 | 12.4 | 12.7 |
| SF (soluble fraction) | wt.-% | 22.3 | 27.8 | 20.2 | 23.7 | 24.2 |
| CF (crystalline fraction) | wt.-% | 77.7 | 72.2 | 79.8 | 76.3 | 75.8 |
| C2 (SF) | wt.-% | 32.0 | 34.6 | 52.7 | 35.5 | 35.5 |
| C2 (CF) | wt.-% | 4.76 | 4.93 | 11.8 | 5.10 | 5.58 |
| IV (rTPO) | dL/g | 2.54 | 2.58 | 2.39 | 2.45 | 2.42 |
| IV (SF) | dL/g | 1.88 | 1.96 | 1.48 | 1.84 | 1.83 |
| IV (CF) | dL/g | 2.69 | 2.77 | 2.57 | 2.59 | 2.54 |
| Flex. Modulus (FM) | MPa | 707 | 629 | 795 | 736 | 730 |
| Storage mod. G' at 23°C | MPa | 455 | 406 | 467 | 461 | 450 |
| $T_g(d)$ | °C | -51.4 | -50.0 | -55.9 | -52.1 | -52.3 |
| $T_g(m)$ | °C | -1.9 | -0.3 | 0.4 | 0.2 | -0.1 |
| Charpy NIS -10°C | kJ/m$^2$ | 36.4 | 60.9 | 10.7 | 40.0 | 89.5 |
| Charpy NIS +20°C | kJ/m$^2$ | 67.3 | 73.2 | 70.6 | 68.1 | 140.9 |

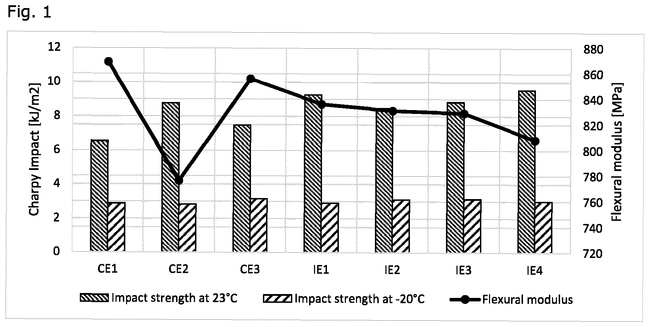

The rTPO polymer powders (impact modifier) as obtained above were compounded in an extruder (ZSK18, melt temperature = 204°C, throughput = 5 kg/h and SEI = 0.33) together with PO-based recyclate and an additive masterbatch based on the recipes mentioned in Table 3 and the measured properties of the resultant recyclate-based polymer compositions are given in Table 5 and shown in Fig. 1.

**Table 3** - Compounding recipes of the recyclate-based polymer compositions.

| Component | Unit | CE1 | CE2 | CE3 | IE1 | IE2 | IE3 | IE4 |
|---|---|---|---|---|---|---|---|---|
| Dipolen S-74 | wt.-% | 98 | 83 | 83 | 83 | 83 | 83 | 83 |
| HC001A-B1 | wt.-% | 1.9 | 1.9 | 1.9 | 1.9 | 1.9 | 1.9 | 1.9 |
| PP-IE1 | wt.-% | | | | 15 | | | |
| PP-IE4 | wt.-% | | | | | | | 15 |
| PP-CE | wt.-% | | | 15 | | | | |
| PP-IE2 | wt.-% | | | | | 15 | | |
| PP-IE3 | wt.-% | | | | | | 15 | |
| PP-RAHECO | wt.-% | | 15 | | | | | |
| AO1 | wt.-% | 0.05 | 0.05 | 0.05 | 0.05 | 0.05 | 0.05 | 0.05 |
| AO2 | wt.-% | 0.05 | 0.05 | 0.05 | 0.05 | 0.05 | 0.05 | 0.05 |

Dipolen™ S-74 is DSD323 PO-sorted SCW (separately collected waste) produced by MTM plastics GmbH and is polyolefin (polypropylene/polyethylene blend) post-consumer recyclate (rPO) including a large part of recycled post-consumer waste coming from pre-sorted household waste with characteristics (e.g. $MFR_2$, C2 content [total, CF, and SF], IV [total, CF, and SF], $T_m$, $H_m$) as mentioned in Table 5 below. It is to be noted that CE1 contains Dipolen™ S-74 and no impact modifier (rTPO), so that the data of CE1 in Table 5 essentially reflects the properties of Dipolen™ S-74.

AO1 is antioxidant pentaerythritol tetrakis[3-[3,5-di-tert-butyl-4-hydroxyphenyl] propionate] (Irganox® 1010, CAS No: 6683-19-8, available from BASF), AO2 antioxidant tris(2,4-di-tert-butylphenyl)phosphite (Irgafos® 168, CAS No: 31570-04-4, available from BASF). The additives AO1 and AO2 are melt-premixed with HC001A-B1 which is polypropylene homopolymer used as carrier polymer of an additive masterbatch having a $MFR_2$ (ISO 1133 at 230°C and 2.16 kg load) of 2.7 g/10min.

PP-RAHECO is a heterophasic reactor grade polypropylene-ethylene copolymer (random-heterophasic PP copolymer, RAHECO) produced in a 3-reactor system commercially available from Borealis. It has an MFR (2.16 kg/230°C) of 1.5 g/10 min and additional characteristics as shown in below Table 4.

**Table 4** - Properties of PP-RAHECO.

| Crystex and thermal data | Unit | PP-RAHECO |
|---|---|---|
| C2 content | wt.-% | 6.98 |
| C2 (SF) | wt.-% | 17.59 |
| C2 (CF) | wt.-% | 4.12 |
| SF | wt.-% | 20.95 |
| IV | dL/g | 2.60 |
| IV (SF) | dL/g | 1.93 |
| IV (CF) | dL/g | 2.79 |
| $T_m$ | C | 148.9 |
| $H_m$ | J/g | 62 |
| $T_c$ | C | 115.4 |
| $H_c$ | J/g | 61 |

**Table 5** - Properties of the recyclate-based polymer compositions

| Property | Unit | CE1 | CE2 | CE3 | IE1 | IE2 | IE3 | IE4 |
|---|---|---|---|---|---|---|---|---|
| $MFR_2$ | g/10min | 5.24 | 4.00 | 4.35 | 4.22 | 4.17 | 4.33 | 3.98 |
| $T_c$ (PP) | °C | 121.9 | 120.9 | 123.9 | 123.8 | 123.9 | 124.1 | 123.9 |
| $T_c$ (PE) | °C | 115.0 | 114.9 | 114.9 | 114.9 | 115.0 | 114.9 | 115.0 |

(continued)

| Property | Unit | CE1 | CE2 | CE3 | IE1 | IE2 | IE3 | IE4 |
|---|---|---|---|---|---|---|---|---|
| $H_c$ (PP) | J/g | 41 | 42 | 46 | 45 | 46 | 47 | 45 |
| $H_c$ (PE) | J/g | 71 | 63 | 62 | 62 | 61 | 58 | 61 |
| $T_{m1}$ (PP) | °C | 161.0 | 159.5 | 162.1 | 161.9 | 162.0 | 162.0 | 161.8 |
| $T_{m2}$ (PE) | °C | 126.1 | 126.0 | 126.1 | 126.1 | 126.0 | 125.9 | 126.0 |
| $H_m$ (PP) | J/g | 41 | 42 | 44 | 45 | 45 | 47 | 45 |
| $H_m$ (PE) | J/g | 71 | 65 | 63 | 64 | 62 | 60 | 63 |
| C2 content | wt.-% | 46.26 | 39.59 | 42.16 | 40.53 | 40.21 | 40.58 | 40.68 |
| C2 (SF) | wt.-% | 46.61 | 40.14 | 41.69 | 40.61 | 40.99 | 40.24 | 40.81 |
| C2 (CF) | wt.-% | 46.10 | 39.07 | 42.79 | 40.94 | 40.35 | 40.12 | 40.06 |
| IV | dL/g | 1.83 | 1.95 | 1.93 | 1.96 | 1.92 | 1.92 | 1.97 |
| IV (CF) | dL/g | 1.89 | 1.98 | 1.97 | 2 | 1.96 | 1.97 | 2.03 |
| IV (SF) | dL/g | 1.04 | 1.16 | 1.15 | 1.22 | 1.22 | 1.28 | 1.28 |
| SF | wt.-% | 8.11 | 10.25 | 10.56 | 10.77 | 11.23 | 11.33 | 11.8 |
| Flex. modulus (FM) | MPa | 869 | 776 | 856 | 836 | 831 | 829 | 808 |
| Charpy NIS 23°C | kJ/m² | 6.54 | 8.76 | 7.47 | 9.25 | 8.48 | 8.84 | 9.54 |
| Charpy NIS -20°C | kJ/m² | 2.88 | 2.83 | 3.15 | 2.91 | 3.11 | 3.14 | 3.01 |
| Tg values | °C | -124.7 / 0.3 / 100.9 | -124.5 / -2.0 / 102.2 | -124.6 / 0.4 / 100.3 | -125.4 / 0.5 / 94.4 | -124.2 / 0.3 / 98.6 | -124.7 / 0.4 / 100.3 | -126.3 / 0.0 / 99.9 |
| Storage mod. G' at 23°C | MPa | 508.6 | 475.7 | 516.4 | 494.5 | 508.4 | 488.8 | 503.2 |
| Δ Charpy NIS 23°C | % | - | 34 | 14 | 41 | 30 | 35 | 46 |

Note that ΔCharpy NIS 23°C designates the increase of the impact strength (23°C) relative to CE1, i.e. a recyclate-based polymer composition that does not contain an impact modifier.

The results in above Table 5 and Fig. 1 show that only adding a well-tailored heterophasic reactor thermoplastic polyolefin (rTPO) according to the present invention to the polyolefin (PO)-based recyclate is capable in improving the toughness by 30% or more (ΔImpact strength (23°C)) without compromising on the stiffness (FM). By contrast, CE2, which uses a heterophasic reactor grade polypropylene-ethylene copolymer having slightly different set-up (e.g. different elastomeric fraction and C2 content), shows a pronounced decrease in the stiffness (FM). CE3, which uses an rTPO having only a slightly different set-up (e.g. different C2-enriched rubber fraction leading to higher C2 content) demonstrated almost no toughness (impact strength) enhancement.

## Claims

1. A recyclate-based polymer composition comprising, based on the total weight of the recyclate-based polymer composition, the following components:

(A) 55.0 to 97.0 wt.-%, preferably 78.0 to 97.0 wt.-%, more preferably 79.0 to 95.0 wt.-%, most preferably 80.0 to 90.0 wt.-%, of a polyolefin (PO)-based recyclate, which has:

a melt flow rate MFR$_2$, according to ISO 1133 at 230°C and 2.16 kg load, in the range of 1.0 to 20.0 g/10 min, a soluble fraction (SF) and a crystalline fraction (CF), both determined by CRYSTEX measurement according to the description, wherein the soluble fraction (SF) is present in an amount of 5.0 to 20.0 wt.-%, a total ethylene (C2) content, determined by CRYSTEX measurement calibrated with NMR according to the description, in the range of 15.0 to 60.0 wt.-%,

of which an ethylene content of the soluble fraction (C2$_{SF}$) is in the range of 15.0 to 60.0 wt.-% and wherein an intrinsic viscosity of the soluble fraction (IV$_{SF}$), determined by CRYSTEX measurement according to the description, is in the range of 0.50 to 2.50 dL/g, and

of which an ethylene content of the crystalline fraction (C2$_{CF}$) is in the range of 15.0 to 60.0 wt.-% and wherein an intrinsic viscosity of the crystalline fraction (IV$_{CF}$), determined by CRYSTEX measurement according to the description, is in the range of 1.00 to 3.00 dL/g,

the polyolefin (PO)-based recyclate having melting properties, such that a first melting temperature T$_{m1}$, according to DSC, is in the range of 150.0 to 170.0°C, T$_{m1}$ reflecting a polypropylene (PP) component, a first melting enthalpy H$_{m1}$, according to DSC, in the range of 20.0 to 80.0 J/g, H$_{m1}$ reflecting a polypropylene (PP) component, a second melting temperature T$_{m2}$, according to DSC, is in the range of 110.0 to 135.0°C, T$_{m2}$ reflecting a polyethylene (PE) component, and a second melting enthalpy H$_{m2}$, according to DSC, in the range of 40.0 to 150.0 J/g, H$_{m2}$ reflecting a polyethylene (PE) component,

(B) 3.0 to 45.0 wt.-%, preferably 3.0 to 22.0 wt.-%, more preferably 5.0 to 20.0 wt.-%, most preferably 10.0 to 18.0 wt.-%, of an impact modifier, which is a heterophasic reactor thermoplastic polyolefin (rTPO) being a reactor blend made in a three-stage or four-stage polymerization process and having the following properties:

a melting temperature T$_m$, according to DSC, in the range of 155.0 to 170.0°C, a soluble fraction (SF) and a crystalline fraction (CF), both determined by CRYSTEX measurement according to the description, wherein the soluble fraction (SF) is present in an amount of 15.0 to 40.0 wt.-%, a total ethylene (C2) content, determined by CRYSTEX measurement calibrated with NMR according to the description, in the range of 9.0 to 17.0 wt.-%,

of which an ethylene content of the soluble fraction (C2$_{SF}$) is in the range of 22.0 to 48.0 wt.-% and wherein an intrinsic viscosity of the soluble fraction (IV$_{SF}$), determined by CRYSTEX measurement according to the description, is in the range of 1.50 to 4.00 dL/g, and of which an ethylene content of the crystalline fraction (C2$_{CF}$) is in the range of 1.5 to 8.5 wt.-% and wherein an intrinsic viscosity of the crystalline fraction (IV$_{CF}$), determined by CRYSTEX measurement according to the description, is in the range of 2.00 to 4.50 dL/g, wherein a ratio of the intrinsic viscosity of the soluble fraction (IV$_{SF}$) to the intrinsic viscosity of the crystalline fraction (IV$_{CF}$) (IV$_{SF}$/IV$_{CF}$) is less than 1.0, and

a melt flow rate MFR$_2$, according to ISO 1133 at 230°C and 2.16 kg load, in the range of 0.5 to 8.0 g/10 min, wherein the recyclate-based polymer composition has: a flexural modulus (FM), according to ISO 178, in the range of 600 to 1200 MPa, preferably 800 to 1000 MPa, more preferably 805 to 900 MPa, an impact strength, Charpy notched ISO 179-1 at 23°C, in the range of 8.0 to 30.0 kJ/m$^2$, preferably 8.0 to 20.0 kJ/m$^2$, more preferably 8.2 to 15.0 kJ/m$^2$, and a melt flow rate MFR$_2$, according to ISO 1133 at 230°C and 2.16 kg load, in the range of 1.0 to 20.0 g/10 min, preferably 1.5 to 15.0 g/10 min, more preferably 2.5 to 10.0 g/10 min.

2. The recyclate-based polymer composition according to claim 1, wherein the recyclate-based polymer composition has one or more, preferably all of the below properties:

a storage modulus G', as determined by dynamic mechanical analysis according to ISO 6721-7 at 23°C, in the range of 300 to 700 MPa, preferably 350 to 650 MPa, more preferably 400 to 600 MPa, an impact strength, Charpy notched ISO 179-1 at -20°C, in the range of 1.5 to 5.5 kJ/m$^2$, preferably in the range of 2.0 to 4.5 kJ/m$^2$, more preferably in the range of 2.2 to 4.0 kJ/m$^2$, and
an increase in impact strength, Charpy notched ISO 179-1 at 23°C, as compared to an identical recyclate-based polymer composition except for not containing the impact modifier (B), in the range of 28.0 to 55.0%, preferably 29.0 to 50.0%.

3. The recyclate-based polymer composition according to claim 1 or 2, wherein the polyolefin (PO)-based recyclate (A) is a polymer blend comprising polypropylene and polyethylene,
the polymer blend being a recycled material being recovered from waste plastic material derived from post-consumer and/or post-industrial waste.

4. The recyclate-based polymer composition according to claim 3, wherein the polyolefin (PO)-based recyclate (A) is a polymer blend comprising, based on the total weight of the polyolefin (PO)-based recyclate:

0 to less than 5 wt.-% of polystyrene, and/or, preferably and,
0 to 3 wt.-% talc, and/or, preferably and,
0 to 5.0 wt.-% polyamide and/or, preferably and,
0 to 3 wt.-% chalk.

5. The recyclate-based polymer composition according to any one of claims 1 to 4, wherein the polyolefin (PO)-based recyclate has one or more, preferably all of the below properties:

a melt flow rate MFR$_2$, according to ISO 1133 at 230°C and 2.16 kg load, in the range of 2.5 to 15.0 g/10 min, preferably 3.0 to 10.0 g/10 min,
a soluble fraction (SF) in an amount of 6.0 to 18.0 wt.-%, preferably 6.5 to 15.0 wt.-%,
a total ethylene (C2) content, determined by CRYSTEX measurement calibrated with NMR according to the description, in the range of 25.0 to 55.0 wt.-%, preferably 30.0 to 52.0 wt.-%,

of which an ethylene content of the soluble fraction (C2$_{SF}$) is in the range of 25.0 to 55.0 wt.-%, preferably 30.0 to 52.0 wt.-%, and wherein an intrinsic viscosity of the soluble fraction (IV$_{SF}$), determined by CRYSTEX measurement according to the description, is in the range of 0.70 to 2.20 dL/g, preferably 0.90 to 2.00 dL/g, of which an ethylene content of the crystalline fraction (C2$_{CF}$) is in the range of 25.0 to 55.0 wt.-%, preferably 30.0 to 52.0 wt.-%, and wherein an intrinsic viscosity of the crystalline fraction (IV$_{CF}$), determined by CRYSTEX measurement according to the description, is in the range of 1.20 to 2.80 dL/g, preferably 1.40 to 2.50 dL/g,

a first melting temperature T$_{m1}$, according to DSC, is in the range of 152.0 to 168.0°C, preferably 155.0 to 165.0°C,
a first melting enthalpy H$_{m1}$, according to DSC, in the range of 30.0 to 70.0 J/g, preferably 35.0 to 60.0 J/g,
a second melting temperature T$_{m2}$, according to DSC, is in the range of 112.0 to 132.0°C, preferably 113.0 to 130.0°C, and
a second melting enthalpy H$_{m2}$, according to DSC, in the range of 50.0 to 125.0 J/g, preferably 55.0 to 110.0 J/g.

6. The recyclate-based polymer composition according to any one of claims 1 to 5, wherein the heterophasic reactor thermoplastic polyolefin (rTPO) has one or more, preferably all of the below properties:

a melting temperature T$_m$, according to DSC, in the range of 158.0 to 169.0°C,
a soluble fraction (SF) in an amount of 20.5 to 35.0 wt.-%, preferably 21.0 to 30.0 wt.-%,
a total ethylene (C2) content, determined by CRYSTEX measurement calibrated with NMR according to the description, in the range of 9.5 to 16.0 wt.-%, preferably 9.5 to 15.0 wt.-%,

of which an ethylene content of the soluble fraction (C2$_{SF}$) is in the range of 24.0 to 42.0 wt.-%, preferably 25.0 to 40.0 wt.-%, and wherein an intrinsic viscosity of the soluble fraction (IV$_{SF}$), determined by CRYSTEX measurement according to the description, is in the range of 1.60 to 3.00 dL/g, preferably 1.70 to 2.50 dL/g, of which an ethylene content of the crystalline fraction (C2$_{CF}$) is in the range of 2.5 to 7.0 wt.-%, preferably 3.5 to 6.5 wt.-%, and wherein an intrinsic viscosity of the crystalline fraction (IV$_{CF}$), determined by CRYSTEX measurement according to the description, is in the range of 2.10 to 4.00 dL/g, preferably 2.20 to 3.50 dL/g, wherein a ratio of the intrinsic viscosity of the soluble fraction (IV$_{SF}$) to the intrinsic viscosity of the crystalline fraction (IV$_{CF}$) (IV$_{SF}$/IV$_{CF}$) is in the range of 0.3 to less than 1.0, preferably 0.4 to 0.9, and

a melt flow rate $MFR_2$, according to ISO 1133 at 230°C and 2.16 kg load, in the range of 1.0 to 8.0 g/10 min, preferably 1.3 to 5.0 g/10 min.

7. The recyclate-based polymer composition according to any one of claims 1 to 6, wherein the heterophasic reactor thermoplastic polyolefin (rTPO) has one or more, preferably all of the below properties:

an intrinsic viscosity IV, determined by CRYSTEX measurement according to the description, in the range of 1.70 to 4.50 dL/g, preferably 1.90 to 3.50 dL/g, more preferably 2.00 to 3.30 dL/g,
an impact strength, Charpy notched ISO 179-2 at -10°C, in the range of 15.0 to 120.0 $kJ/m^2$, preferably 20.0 to 115.0 $kJ/m^2$, more preferably 30.0 to 110.0 $kJ/m^2$, and
an impact strength, Charpy notched ISO 179-2 at 20°C, in the range of 30.0 to 250.0 $kJ/m^2$, preferably 40.0 to 220.0 $kJ/m^2$, more preferably 55.0 to 200.0 $kJ/m^2$.

8. The recyclate-based polymer composition according to any one of claims 1 to 7, wherein the heterophasic reactor thermoplastic polyolefin (rTPO) is a reactor blend made in a three-stage polymerization process,
wherein the rTPO comprises, based on the total weight of the rTPO, the following fractions:

(B1) 40.0 to 60.0 wt.-% of a polypropylene homopolymer fraction (PPH),
(B2) 30.0 to 45.0 wt.-% of a random ethylene/propylene (C2/C3) polymer fraction (rEP), the rEP preferably having a C2 content ($C2_{rEP}$), as determined by quantitative NMR according to the description, of 6.00 to 12.00 wt.-%, more preferably 6.50 to 10.50 wt.-%, and
(B3) 10.0 to 25.0 wt.-% of a C2C3 elastomeric propylene copolymer fraction (EPC), the EPC preferably having a C2 content ($C2_{EPC}$), as determined by quantitative NMR according to the description, of 40.00 wt.-% to 75.00 wt.-%, more preferably 41.00 to 70.00 wt.-%, most preferably 42.00 to 65.00 wt.-%, wherein the three-stage polymerization process preferably applies a slurry reactor (SR) - gas phase reactor (GPR1) - gas phase reactor (GPR2) cascade, such that the PPH is made in the SR, the rEP is made in the GPR1 and the EPC is made in the GPR2, preferably in the presence of a Ziegler Natta catalyst system, the PPH and rEP forming a matrix of the rTPO in which the EPC is dispersed.

9. The recyclate-based polymer composition according to any one of claims 1 to 7, wherein the heterophasic reactor thermoplastic polyolefin (rTPO) is a reactor blend made in a four-stage polymerization process,
wherein the rTPO comprises, based on the total weight of the rTPO, the following fractions:

(B1) 35.0 to 70.0 wt.-% of a polypropylene homopolymer fraction (PPH),
(B2) 20.0 to 50.0 wt.-% of a random ethylene/propylene (C2/C3) polymer fraction (rEP), the rEP preferably having a C2 content ($C2_{rEP}$), as determined by quantitative NMR according to the description, of 6.00 to 12.00 wt.-%, more preferably 6.50 to 10.50 wt.-%,
(B3) 5.0 to 25.0 wt.-% of a first C2C3 elastomeric propylene copolymer fraction (EPC), the EPC preferably having a C2 content ($C2_{EPC}$), as determined by quantitative NMR according to the description, of 40.00 to 75.00 wt.-%, more preferably 41.00 to 70.00 wt.-%, most preferably 42.00 to 65.00 wt.-%,, and
(B4) 4.0 to 20.0 wt.-% of a second C2C3 elastomeric propylene copolymer fraction (EEPC), the EEPC preferably having a C2 content ($C2_{EEPC}$), as determined by quantitative NMR according to the description, of 40.00 to 75.00 wt.-%, more preferably 41.00 to 70.00 wt.-%, most preferably 42.00 to 65.00 wt.-%,
wherein the four-stage polymerization process preferably applies a slurry reactor (SR) - gas phase reactor (GPR1) - gas phase reactor (GPR2) - gas phase reactor (GPR3) cascade, such that the PPH is made in the SR, the rEP is made in the GPR1, the EPC is made in the GPR2, and the EEPC is made in the GPR3, preferably in the presence of a Ziegler Natta catalyst system, the PPH and rEP forming a matrix of the rTPO in which the EPC and the EEPC are dispersed.

10. The recyclate-based polymer composition according to any one of claims 1 to 9, wherein

the impact modifier includes a polymeric $\alpha$-nucleating agent, preferably poly(vinyl cyclohexane) or poly(vinyl cyclopentane), wherein the amount of the polymeric $\alpha$-nucleating agent, relative to the rTPO including the polymeric $\alpha$-nucleating agent taken as 100%, is preferably in a range of 0.0001 to 0.1000 wt.-%, more preferably 0.0005 to 0.0500 wt.-%, most preferably 0.0008 to 0.0100 wt.-%, and/or
the impact modifier includes non-polymeric nucleating agent(s), preferably at least $\alpha$-nucleating agent(s), wherein the amount of the non-polymeric nucleating agent(s) is 0.0010 to 3.0000 wt.-%, preferably 0.0100 to 2.5000 wt.-%, more preferably 0.0100 to 2.0000 wt.-%, more preferably 0.0500 to 1.8000 wt.-%, and most preferably 0.1000 to 1.5000 wt.-%, relative to the rTPO including the non-polymeric nucleating agent(s) taken as 100%.

11. The recyclate-based polymer composition according to any one of claims 1 to 10, which comprises, based on the total weight of the recyclate-based polymer composition,
up to 5.000 wt.-%, preferably 0.010 to 3.500 wt.-%, more preferably 0.025 to 2.500 wt.-%, more preferably 0.050 to 1.500 wt.-%, most preferably 0.075 to 0.750 wt.-%, additive(s) (C), said additive(s) being preferably selected from the group consisting of antioxidants, acid scavenges, UV-stabilizers, antistatic agents, and slip agents and mixtures thereof.

12. Use of a heterophasic reactor thermoplastic polyolefin (rTPO) being a reactor blend made in a three-stage or four-stage polymerization process and having the following properties:

a melting temperature $T_m$, according to DSC, in the range of 155.0 to 170.0°C,
a soluble fraction (SF) and a crystalline fraction (CF), both determined by CRYSTEX measurement according to the description, wherein the soluble fraction (SF) is present in an amount of 15.0 to 40.0 wt.-%,
a total ethylene (C2) content, determined by CRYSTEX measurement calibrated with NMR according to the description, in the range of 9.0 to 17.0 wt.-%,

of which an ethylene content of the soluble fraction ($C2_{SF}$) is in the range of 22.0 to 48.0 wt.-% and wherein an intrinsic viscosity of the soluble fraction ($IV_{SF}$), determined by CRYSTEX measurement according to the description, is in the range of 1.50 to 4.00 dL/g, and
of which an ethylene content of the crystalline fraction ($C2_{CF}$) is in the range of 1.5 to 8.5 wt.-% and wherein an intrinsic viscosity of the crystalline fraction ($IV_{CF}$), determined by CRYSTEX measurement according to the description, is in the range of 2.00 to 4.50 dL/g,
wherein a ratio of the intrinsic viscosity of the soluble fraction ($IV_{SF}$) to the intrinsic viscosity of the crystalline fraction ($IV_{CF}$) ($IV_{SF}/IV_{CF}$) is less than 1.0, and

a melt flow rate $MFR_2$, according to ISO 1133 at 230°C and 2.16 kg load, in the range of 0.5 to 8.0 g/10 min,

as an impact modifier (B) for improving the impact strength of a polyolefin (PO)-based recyclate (A) as it is defined in any one of claims 1 and 3 to 5.

13. Method for manufacturing a recyclate-based polymer composition according to any one of claims 1 to 11, the method comprising the steps of:

a) providing the polyolefin (PO)-based recyclate (A) as it is defined in any one of claims 1 and 3 to 5;
b) providing the heterophasic reactor thermoplastic polyolefin (rTPO) as it is defined in any one of claims 1 and 6 to 10;
c) melting and mixing the polyolefin (PO)-based recyclate (A) and the heterophasic reactor thermoplastic polyolefin (rTPO) together, to obtain the recyclate-based polymer composition,
d) optionally cooling the recyclate-based polymer composition and pelletizing it.

14. Use of the recyclate-based polymer composition according to any one of claims 1 to 11 for producing a film, preferably obtained by casting or extrusion, or producing a molded article, preferably obtained by blow or injection molding, more preferably by injection molding.

15. Film or article, comprising the recyclate-based polymer composition according to any one of claims 1 to 11,

wherein the film is a packaging film, preferably obtained by casting or extrusion, such as extrusion blow molding, or
wherein the article is a molded article, preferably an injection molded article.

Fig. 1

Europäisches
Patentamt

European
Patent Office

Office européen
des brevets

# EUROPEAN SEARCH REPORT

**Application Number**

EP 24 18 4900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2015/169690 A1 (BOREALIS AG [AT]) 12 November 2015 (2015-11-12) * page 14 * * pages 18-19 * * page 21, table 5, example IE6 * ----- | 1-15 | INV. C08F210/06 C08L23/10 C08L23/12 |
| A | WO 2022/008434 A1 (BOREALIS AG [AT]) 13 January 2022 (2022-01-13) * page 27, table 3, blend A * * pages 24-25, example IE3 * * page 28, table 4, example IE3-Comp3 * ----- | 1-15 | |
| A | WO 2023/217709 A1 (BOREALIS AG [AT]) 16 November 2023 (2023-11-16) * page 28, table 1, blend #2 * * page 30, table 2 * * page 33, tables 3-4, example IE4 * ----- | 1-15 | |

| TECHNICAL FIELDS SEARCHED (IPC) |
|---|
| C08F C08L |

The present search report has been drawn up for all claims

| Place of search | Date of completion of the search | Examiner |
|---|---|---|
| Munich | 13 December 2024 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4900

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | Publication date |
|---|---|---|---|
| WO 2015169690 A1 | 12-11-2015 | BR 112016024671 A2 | 15-08-2017 |
| | | CA 2946800 A1 | 12-11-2015 |
| | | CN 106232707 A | 14-12-2016 |
| | | EP 3140348 A1 | 15-03-2017 |
| | | ES 2945904 T3 | 10-07-2023 |
| | | TW 201602199 A | 16-01-2016 |
| | | US 2017044359 A1 | 16-02-2017 |
| | | WO 2015169690 A1 | 12-11-2015 |
| WO 2022008434 A1 | 13-01-2022 | CN 115916852 A | 04-04-2023 |
| | | EP 3936565 A1 | 12-01-2022 |
| | | TW 202206534 A | 16-02-2022 |
| | | US 2023279208 A1 | 07-09-2023 |
| | | WO 2022008434 A1 | 13-01-2022 |
| WO 2023217709 A1 | 16-11-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2984130 B1
- EP 3140348 B1
- EP 3165473 B1
- EP 3802689 B1
- WO 2020070175 A1
- WO 2020070176 A1
- WO 2020182435 A1
- WO 2020221741 A1
- WO 2023062058 A1
- WO 2017198633 A1
- WO 2017148970 A1

- WO 2020207825 A1
- WO 2014187687 A1
- WO 2012007430 A1
- EP 2610271 A1
- EP 261027 A1
- EP 2610272 A1
- EP 4141068 A1
- WO 2016066446 A1
- EP 2960256 B1
- EP 2960279 B1

**Non-patent literature cited in the description**

- **GAHLEITNER et al.** *Intern. Polymer Processing*, 2002, vol. XVII, 4
- **K. K. MCAULEY** ; **J. F. MCGREGOR**. On-line Inference of Polymer Properties in an Industrial Polyethylene Reactor. *AIChE Journal*, June 1991, vol. 37 (6), 825-835
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157

- **CHENG, H. N.** *Macromolecules*, 1984, vol. 17, 1950
- **SINGH, G.** ; **KOTHARI, A.** ; **GUPTA, V.** *Polymer Testing*, 2009, vol. 28 (5), 475
- **KAKUGO, M.** ; **NAITO, Y.** ; **MIZUNUMA, K.** ; **MIYATAKE, T.** *Macromolecules*, 1982, vol. 15, 1150
- **RANDALL, J.** *Macromol. Sci., Rev. Macromol. Chem. Phys.*, 1989, vol. C29, 201
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 6683-19-8
- *CHEMICAL ABSTRACTS*, 31570-04-4
- *CHEMICAL ABSTRACTS*, 1592-23-0